# EUROPEAN PATENT APPLICATION

(11) **EP 4 843 952 A1**
(43) Date of publication of application: **25.11.2026**
(21) Application number: 25741920.0
(22) Date of filing: 14.01.2025
(51) Int. Cl.: C01B 39/48, B01J 29/76, C01B 39/36, C01B 39/40

(54) **IRON-CONTAINING SMALL-PORE ZEOLITE**

(30) Priority: 16.01.2024 JP 2024004515
(71) Applicant: Tosoh Corporation, Shunan-shi, Yamaguchi 746-8501 (JP)
(72) Inventor: CHEN, Ning, Shunan-shi Yamaguchi 746-8501 (JP); ITO, Masato, Shunan-shi Yamaguchi 746-8501 (JP); AOYAMA, Hidekazu, Shunan-shi Yamaguchi 746-8501 (JP); NAKAO, Keita, Shunan-shi Yamaguchi 746-8501 (JP)
(74) Representative: TBK
(86) International application number: PCT/JP2025/000778
(87) International publication number: WO 2025/154694

(57) **Abstract**

Provided is at least one of an iron-containing small-pore zeolite having, compared with known iron-containing small-pore zeolites, high nitrogen oxide reduction performance at low temperatures even after exposure to a high-temperature, high-humidity atmosphere having a moisture content of more than 10% by volume; a method for producing the iron-containing small-pore zeolite; and a nitrogen oxide reduction catalyst containing the iron-containing small-pore zeolite.

## Description

### TECHNICAL FIELD

The present disclosure relates to a small-pore zeolite containing iron.

### BACKGROUND ART

Compared with large-pore zeolites such as *BEA-type zeolites, small-pore zeolites such as CHA-type zeolites are less likely to exhibit a decrease in crystallinity after exposure to a high-temperature, high-humidity atmosphere. Therefore, small-pore zeolites can be used in applications in which use of large-pore zeolites is difficult, such as applications in which exposure to a high-temperature, high-humidity atmosphere having a high moisture content is involved. Small-pore zeolites containing iron or copper as an active metal (metal-containing small-pore zeolites) are widely used as nitrogen oxide reduction catalysts.

Compared with small-pore zeolites containing iron, small-pore zeolites containing copper are less likely to exhibit a decrease in crystallinity even after exposure to a high-temperature, high-humidity atmosphere. In addition to this, the nitrogen oxide reduction performance at low temperatures is high. On the other hand, a reduction reaction of nitrogen oxides using small-pore zeolites containing copper involves generation of nitrous oxide (N₂O) as a byproduct. Therefore, studies have been conducted on small-pore zeolites containing iron as nitrogen oxide reduction catalysts that suppress generation of N₂O as a byproduct and improvement of nitrogen oxide reduction performance thereof.

For example, Patent Document 1 discloses producing an iron-containing small-pore zeolite by mixing SSZ-13 (a CHA-type zeolite), which is a small-pore zeolite, with iron nitrate. Patent Document 2 discloses directly producing an iron-containing small-pore zeolite (an AEI-type zeolite and a CHA-type zeolite) by crystallization.

### PRIOR ART DOCUMENTS

### PATENT DOCUMENTS

Patent Document 1: WO 2014/062949 A
Patent Document 2: WO 2017/134001 A

### DISCLOSURE OF INVENTION

### TECHNICAL PROBLEM

The iron-containing small-pore zeolite disclosed in Patent Document 1 is said not to exhibit a decrease in nitrogen oxide reduction performance even after exposure to a high-temperature, high-humidity atmosphere having a low moisture content. However, when exposed to a high-temperature, high-humidity atmosphere having a high moisture content, the nitrogen oxide reduction performance was significantly reduced. The iron-containing small-pore zeolite of Patent Document 2 exhibited a significant decrease in nitrogen oxide reduction performance after exposure to a high-temperature, high-humidity atmosphere having a moisture content of 10% by volume.

An object of the present disclosure is to provide at least one of an iron-containing small-pore zeolite having, compared with known iron-containing small-pore zeolites, high nitrogen oxide reduction performance at low temperatures even after exposure to a high-temperature, high-humidity atmosphere having a moisture content of more than 10% by volume; a method for producing the same; and a nitrogen oxide reduction catalyst containing the same.

### SOLUTION TO PROBLEM

In the present disclosure, the nitrogen oxide reduction performance of an iron-containing small-pore zeolite was studied focusing on the state of iron contained in the small-pore zeolite. As a result, it was found that, compared with the molar ratio of silica to alumina (SiO₂/Al₂O₃ ratio), the state of iron present in the small-pore zeolite has a greater influence on the nitrogen oxide reduction performance. As a result of further studies, it was found that, compared with known iron-supported small-pore zeolites, an iron-containing small-pore zeolite containing a certain amount or more of iron and having a specific IR spectrum and a specific UV-VIS spectrum has high nitrogen oxide reduction performance, particularly high nitrogen oxide reduction performance at low temperatures after exposure to a severe high-temperature, high-quality atmosphere having a moisture content of more than 10% by volume.

That is, the present invention is as set forth in the claims, and the summary of the present disclosure is as follows.
[1] An iron-containing small-pore zeolite having an iron content of 1.0% by mass or more, wherein a ratio of a height intensity of a peak having a peak top at 3735 ± 10 cm⁻¹ to a height intensity of a peak having a peak top at 1860 ± 10 cm⁻¹ in an IR spectrum is 0.50 or less; and, in a UV-VIS spectrum thereof, a proportion of a peak area within a wavelength range of 190 to 300 nm to a peak area within a wavelength range of 190 to 600 nm is 60% or more.
[2] The iron-containing small-pore zeolite according to [1], having a BET specific surface area of 530 m²/g or more.
[3] The iron-containing small-pore zeolite according to [1] or [2], having an isolated iron ion content of 0.8% by mass or more.
[4] The iron-containing small-pore zeolite according to any one of [1] to [3], wherein a ratio of a mesopore volume to a total volume of mesopores and micropores is 0.40 or less.
[5] The iron-containing small-pore zeolite according to any one of [1] to [4], wherein the total volume of mesopores and micropores is 0.15 cm³/g or more.
[6] The iron-containing small-pore zeolite according to any one of [1] to [5], wherein a molar ratio of silica to alumina is 10 or more.
[7] The iron-containing small-pore zeolite according to any one of [1] to [6], wherein the small-pore zeolite is a zeolite having one or more structures selected from the group consisting of AEI, CHA, LEV, MWW, ERI and AFX.
[8] The iron-containing small-pore zeolite according to any one of [1] to [7], wherein the small-pore zeolite is a CHA-type zeolite or an AFX-type zeolite.
[9] The iron-containing small-pore zeolite according to any one of [1] to [8], wherein a nitrogen oxide reduction rate is 20% or more, the nitrogen oxide reduction rate being measured under the following nitrogen oxide reduction conditions after exposure treatment to a high-temperature, high-humidity atmosphere under the following exposure conditions.

### <Exposure Conditions>

| | |
|---|---|
| Atmosphere | : air having a moisture content of 20 vol% |
| Flow rate | : 300 mL/min |
| Treatment temperature | : 700°C |
| Treatment time | : 20 hours |

### <Nitrogen Oxide Reduction Conditions>

| | | |
|---|---|---|
| Composition of nitrogen oxide-containing gas | : NO | 200 ppm |
| | NH₃ | 200 ppm |
| | O₂ | 10 vol% |
| | H₂O | 3 vol% |
| | N2 | balance |
| Flow rate of nitrogen oxide-containing gas | : 1.5 L/min | |
| Space velocity | : 60,000 hr⁻¹ | |
| Measurement temperature | : 200°C | |

[10] A method for producing the iron-containing small-pore zeolite according to any one of [1] to [9], the method comprising crystallizing a composition containing a silica-alumina source, an iron source, an organic structure-directing agent, an alkali source and water, wherein a ratio of iron to silicon in terms of SiO₂ in the composition is more than 0.01, and the composition contains two or more kinds of alkali sources.
[11] The method according to [10], wherein the composition does not contain a zeolite as the silica-alumina source.
[12] The method according to [10] or [11], wherein the alkali source contains at least a potassium source.
[13] A catalyst comprising the iron-containing small-pore zeolite according to any one of [1] to [9].

### ADVANTAGEOUS EFFECTS OF INVENTION

According to the present disclosure, at least one of an iron-containing small-pore zeolite having, compared with known iron-containing small-pore zeolites, high nitrogen oxide reduction performance at low temperatures even after exposure to a high-temperature, high-humidity atmosphere having a moisture content of more than 10% by volume; a method for producing the same; and a nitrogen oxide reduction catalyst containing the same, can be provided.

### BRIEF DESCRIPTION OF DRAWINGS

[Fig. 1] UV-VIS spectrum of the iron-containing small-pore zeolite of Example 1
[Fig. 2] UV-VIS spectrum of the iron-containing small-pore zeolite of Example 2
[Fig. 3] UV-VIS spectrum of the iron-containing small-pore zeolite of Example 3
[Fig. 4] UV-VIS spectrum of the iron-containing small-pore zeolite of Example 4
[Fig. 5] UV-VIS spectrum of the iron-containing small-pore zeolite of Comparative Example 1
[Fig. 6] UV-VIS spectrum of the iron-containing small-pore zeolite of Comparative Example 2
[Fig. 7] UV-VIS spectrum of the iron-containing small-pore zeolite of Comparative Example 4
[Fig. 8] UV-VIS spectrum of the iron-containing small-pore zeolite of Example 5
[Fig. 9] UV-VIS spectrum of the iron-containing small-pore zeolite of Comparative Example 5

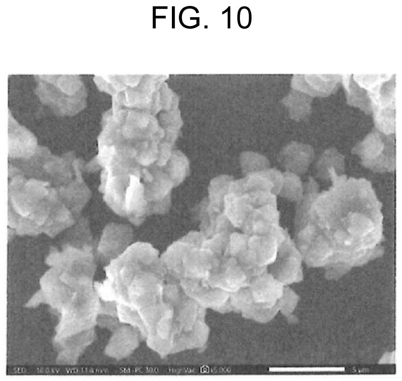

[Fig. 10] SEM image of the iron-containing small-pore zeolite of Example 5

### DESCRIPTION OF EMBODIMENTS

The present disclosure will be described below with reference to an example of an embodiment.

"Zeolite" is a compound having a regular structure in which framework atoms (hereinafter also referred to as "T atoms") are bonded through oxygen (O), the T atoms being at least one of a metal atom and/or a metalloid atom. Examples of the metal atoms include one or more selected from the group consisting of aluminum (Al), titanium (Ti), iron (Fe), zinc (Zn), gallium (Ga) and tin (Sn); at least one of aluminum and iron is preferred, and aluminum is more preferred. Examples of the metalloid atoms include one or more selected from the group consisting of boron (B), silicon (Si), germanium (Ge), arsenic (As), antimony (Sb) and tellurium (Te); silicon is preferred.

A "small-pore zeolite" is a zeolite in which the largest pore formed in the zeolite structure is a pore formed by a ring structure composed of 8 oxygen atoms and T atoms (an 8-membered oxygen ring pore).

A "medium-pore zeolite" is a zeolite in which the largest pore formed in the zeolite structure is a pore formed by a ring structure composed of 10 oxygen atoms and T atoms (a 10-membered oxygen ring pore).

A "large-pore zeolite" is a zeolite in which the largest pore formed in the zeolite structure is a pore formed by a ring structure composed of 12 oxygen atoms and T atoms (a 12-membered oxygen ring pore).

A "zeolite-like compound" is a compound having a regular structure in which T atoms are bonded through oxygen, the T atoms containing at least one atom other than a metal or metalloid (hereinafter also referred to as a "non-metal atom"). Examples of the non-metal atom include phosphorus (P). Examples of the zeolite-like compound include composite phosphorus compounds containing phosphorus (P) as a T atom, such as aluminophosphate (AlPO) and silicoaluminophosphate (SAPO). For the sake of clarity, the zeolite in the present embodiment does not include zeolite-like compounds.

The "regular structure" in a zeolite or a zeolite-like compound (hereinafter also referred to as a "zeolite structure") is a framework structure specified by a structure code defined by the Structure Commission of the International Zeolite Association (hereinafter, such a structure code is also referred to simply as a "structure code"). For example, a CHA structure is a framework structure specified as a structure code "CHA". Identification of the zeolite structure may be carried out by comparison between an XRD pattern (hereinafter also referred to as a "reference pattern") described in CHA of the Zeolite Framework Types on the website of the Structure Commission of the IZA (http://www.iza-struture.org/databases/) and the XRD pattern. In the present embodiment, the zeolite structure, the framework structure, the crystal structure and the crystal phase are used as synonymous terms.

In the present embodiment, the term "-type zeolite", such as "CHA-type zeolite", means a zeolite having a zeolite structure corresponding to the structure code.

"Aluminosilicate" is a composite oxide having a structure composed of a repetition of networks in which aluminum (Al) and silicon (Si) are bonded through oxygen (O). Among aluminosilicates, those having crystalline XRD peaks in a powder X-ray diffraction (hereinafter also referred to as "XRD") pattern are "crystalline aluminosilicates", and those not having any crystalline XRD peaks are "amorphous aluminosilicates".

The XRD pattern in the present embodiment is an XRD pattern obtained by XRD measurement under the following conditions.

| | |
|---|---|
| Acceleration current/voltage | : 40 mA/40 kV |
| Radiation source | : CuKα radiation (λ = 1.5405 Å) |
| Measurement mode | : step scan |
| Scan condition | : 40 °/min |
| Measurement time | : 3 s |
| Measurement range | : 2θ = 3° to 43° |
| Divergence vertical limiting slit | : 10 mm |
| Divergence/incident slit | : 1° |
| Receiving slit | : open |
| Receiving Soller slit | : 5° |
| Detector | : semiconductor detector (D/teX Ultra) |
| Filter | : Ni filter |

The XRD pattern can be measured using a general powder X-ray diffractometer (e.g., Ultima IV Protectus manufactured by Rigaku Corporation). The crystalline XRD peak is a peak detected by identifying the 2θ at the peak top in the analysis of the XRD pattern using general analytical software (e.g., SmartLab Studio II manufactured by Rigaku Corporation), and is in particular an XRD peak having a full width at half maximum of 2θ = 0.50° or less.

Examples of analysis conditions for the XRD pattern include the following conditions.

| | |
|---|---|
| Fitting conditions | : automatic; background refined split pseudo-Voigt function (peak shape) |
| Background removal method | : fitting method |
| Kα2 removal method | : Kα1/Kα2 ratio = 0.497 |

### [Iron-Containing Small-Pore Zeolite]

The present embodiment is an iron-containing small-pore zeolite having an iron content of 1.0% by mass or more, wherein, in a UV-VIS spectrum thereof, the proportion of a peak area within a wavelength range of 190 to 300 nm to a peak area within a wavelength range of 190 to 600 nm (hereinafter also referred to as an "area ratio") is 60% or more. By having both such an iron content and such an area ratio, the iron-containing small-pore zeolite according to the present embodiment is considered to be in a state having higher activity, particularly a state having higher catalytic activity. As a result, even after exposure to a high-temperature, high-humidity atmosphere having a moisture content of more than 10% by volume, the iron-containing small-pore zeolite has higher nitrogen oxide reduction performance at low temperatures compared with known iron-containing small-pore zeolites.

The iron-containing small-pore zeolite according to the present embodiment is a small-pore zeolite containing iron (Fe), and is preferably a crystalline aluminosilicate containing iron. Examples of the iron-containing small-pore zeolite include a zeolite having one or more structures selected from the group consisting of AEI, CHA, LEV, MWW, ERI, KFI and AFX, each containing iron; further specifically, a zeolite having one or more structures selected from the group consisting of AEI, CHA, LEV, ERI and AFX, each containing iron; and still further specifically, a zeolite having one or more structures selected from the group consisting of AEI, CHA and AFX, each containing iron. The iron-containing small-pore zeolite according to the present embodiment is preferably a zeolite having at least one structure selected from CHA and AFX, each containing iron, and is more preferably a zeolite having a CHA structure or an AFX structure, each containing iron. Specific examples of the small-pore zeolite include one or more selected from the group consisting of AEI-type zeolite, CHA-type zeolite, LEV-type zeolite, MWW-type zeolite, ERI-type zeolite and AFX-type zeolite; further specifically, one or more selected from the group consisting of AEI-type zeolite, CHA-type zeolite, LEV-type zeolite, ERI-type zeolite and AFX-type zeolite; and still further specifically, one or more selected from the group consisting of AEI-type zeolite, CHA-type zeolite and AFX-type zeolite. At least one of a CHA-type zeolite and an AFX-type zeolite is preferred, and a CHA-type zeolite or an AFX-type zeolite is more preferred. From the viewpoint of hydrothermal stability, an AFX-type zeolite is preferred. From the viewpoint of industrial production, a CHA-type zeolite is preferred. When the small-pore zeolite in the iron-containing small-pore zeolite according to the present embodiment is a CHA-type zeolite or the like, it may also be referred to as an iron-containing CHA-type zeolite or the like.

The iron contained in the iron-containing small-pore zeolite according to the present embodiment functions as an active metal. By containing iron, the iron-containing small-pore zeolite exhibits nitrogen oxide reduction performance. The iron is considered to be contained as at least one iron species selected from iron ions (Fe³⁺), iron clusters (FeₓO_{y}) and iron oxide particles (Fe₂O₃). Since iron ions are considered to function as active species for nitrogen oxide reduction at low temperatures, the iron-containing small-pore zeolite according to the present embodiment contains at least iron ions, preferably contains a large amount of iron ions, and more preferably contains iron mainly as iron ions.

The iron contained in the iron-containing small-pore zeolite according to the present embodiment may be incorporated by substitution into the zeolite structure. It is preferable that at least a part of the iron be substituted into the zeolite structure (framework structure) of the iron-containing small-pore zeolite. That is, the iron-containing small-pore zeolite according to the present embodiment is preferably an iron-containing small-pore zeolite in which at least a part of the iron is substituted into the zeolite framework (iron-substituted small-pore zeolite), and may be an iron-containing small-pore zeolite in which the iron is substituted into the zeolite framework and is also supported thereon. Compared with an iron-containing small-pore zeolite (iron-supported small-pore zeolite) in which iron is contained only by being supported, the degree of decrease in the nitrogen oxide reduction rate when the reaction temperature for nitrogen oxide reduction decreases is likely to be suppressed.

It is considered that selective removal of the iron species contained in the iron-containing small-pore zeolite is substantially not possible. Therefore, for example, in an iron-containing small-pore zeolite containing iron ions, iron clusters and iron oxide particles, it is not possible to remove only the iron clusters and the iron oxide particles to leave only the iron ions. In addition, no specific technique capable of selectively the iron species is known.

The iron content of the iron-containing small-pore zeolite according to the present embodiment is 1.0% by mass or more, and is preferably 1.1% by mass or more, 1.15% by mass or more, or 1.3% by mass or more. If the iron content is less than 1.0% by mass, even when the iron content and the area ratio described below are both satisfied, the nitrogen oxide reduction performance at low temperatures remains at the same level as that of known iron-containing small-pore zeolites. The iron content may be any amount that allows nitrogen oxide reduction to proceed efficiently, and may be, for example, 3.0% by mass or less, 2.5% by mass or less, 2.3% by mass or less, or 2.0% by mass or less. It is preferable that the iron-containing small-pore zeolite have the area ratio described below and the iron content be 1.0% by mass or more and 3.0% by mass or less, 1.1% by mass or more and 2.5% by mass or less, 1.15% by mass or more and 2.3% by mass or less, or 1.3% by mass or more and 2.0% by mass or less.

In the present embodiment, the "iron content" is the mass ratio [mass%] of iron (Fe) based on the mass of the iron-containing small-pore zeolite. The mass of the iron-containing small-pore zeolite is the total mass of aluminum calculated in terms of Al₂O₃, silicon calculated in terms of SiO₂, and iron (Fe), which are contained in the iron-containing small-pore zeolite.

The iron content of the iron-containing small-pore zeolite according to the present embodiment may be any value that satisfies the above-described range. The ratio of iron to silica (hereinafter also referred to as a "Fe/Si ratio") [mol/mol] in the iron-containing small-pore zeolite according to the present embodiment is preferably 0.003 or more, 0.005 or more, or 0.010 or more, and is preferably 0.050 or less, 0.040 or less, or 0.030 or less. The above ratio may be, for example, 0.003 or more and 0.050 or less, 0.005 or more and 0.040 or less, or 0.010 or more and 0.030 or less.

In the UV-VIS spectrum of the iron-containing small-pore zeolite according to the present embodiment, the proportion of the peak area within a wavelength range of 190 to 300 nm to the peak area within a wavelength range of 190 to 600 nm (the area ratio) is 40% or more, and is preferably 60% or more, 70% or more, or 80% or more. After subjecting peaks in the UV-VIS spectrum to peak separation as necessary, the state of iron (iron species) can be determined on the basis of the position (wavelength) of the peaks, and the relative amount of the iron species can be determined from the peak area. On the other hand, the peak height of the peaks in the UV-VIS spectrum is considered not to have technical significance as an index of the state and content of iron. If the area ratio is less than 40%, even when the iron content is high, the nitrogen oxide reduction performance at low temperatures, particularly at 200°C or less, is low, and remains at the same level as that of known iron-containing small-pore zeolites. The area ratio is preferably high. The area ratio may be 100% or less, less than 100%, 90% or less, or less than 90%, and is preferably 40% or more and 100% or less, 60% or more and less than 100%, 70% or more and 90% or less, or 80% or more and less than 90%. In order to readily achieve practical nitrogen oxide reduction performance, it is preferable that the iron-containing small-pore zeolite according to the present embodiment contain iron in the above-described iron content and have an area ratio of 40% or more and 100% or less, an area ratio of 60% or more and less than 100%, an area ratio of 70% or more and 90% or less, or an area ratio of 80% or more and less than 90%.

In the present embodiment, the area ratio may be determined by analyzing a UV-VIS spectrum measured under the following conditions using a general ultraviolet-visible spectrophotometer (e.g., an ultraviolet-visible spectrophotometer V-770 manufactured by JASCO Corporation).

| | |
|---|---|
| Integrating sphere unit | : ISN-923 (manufactured by JASCO Corporation) |
| Measurement mode | : Diffuse reflectance method |
| Wavelength | : 190 to 700 nm |
| Temperature | : room temperature |
| Slit width | : 5 nm |
| Background | : barium sulfate |

The analysis of the UV-VIS spectrum may be performed using analytical software attached to the ultraviolet-visible-near-infrared spectrophotometer (e.g., Fityk ver. 0.9.8). After performing peak separation under the following conditions, the peak area within a wavelength range of 190 to 600 nm and the peak area within a wavelength range of 190 to 300 nm are determined, and the area ratio may be calculated from the proportion thereof. That is, the obtained UV-VIS spectrum is corrected such that the ratio of the reflectance of the iron-containing small-pore zeolite according to the present embodiment to the reflectance of barium sulfate at a wavelength of 700 nm (hereinafter also referred to as "γ∞" or "relative reflectance") is 1. Subsequently, the corrected UV-VIS spectrum may be subjected to KM (Kubelka-Munk) transformation by the KM function (f(γ∞)) represented by the following equation.$f \left({γ}^{∞}\right) = {\left(1-{γ}^{∞}\right)}^{2} / 2 {γ}^{∞}$ (1)

After the KM-transformed UV-VIS spectrum is subjected to fitting and waveform separation using general analytical software (e.g., Fityk 0.9.8) and Gaussian as a fitting function, the area of peaks included in a wavelength range of 190 nm or more and 300 nm or less, the area of peaks included in a wavelength range of more than 300 nm and 400 nm or less, and the area of peaks included in a wavelength range of more than 400 nm and 600 nm or less may be determined, thereby obtaining the peak area for each wavelength range. The sum of the peak areas within the entire wavelength range may be taken as the peak area (total area) within a wavelength range of 190 nm or more and 600 nm or less. The area ratio for each wavelength range may be determined from the ratio of the peak area for each wavelength range to the obtained peak area (total area) within a wavelength range of 190 nm or more and 600 nm or less. The area of peaks in each wavelength range may be determined as the area of peaks included in each wavelength range regardless of the position of the peak top after waveform separation. For example, in the case of a peak having a wavelength range of 280 to 310 nm and a peak top at 290 nm, the area within a wavelength range of 280 nm or more and 300 nm or less may be taken as the area of peaks included in a wavelength range of 190 nm or more and 300 nm or less, and the area within a wavelength range of more than 300 nm and 310 nm or less may be taken as the area of peaks included in a wavelength range of more than 300 nm and 400 nm or less.

One of the reasons why the nitrogen oxide reduction performance, particularly the nitrogen oxide reduction performance at low temperatures, is higher than that of known iron-containing small-pore zeolites when such an iron content and such an area ratio are both satisfied is considered to be that, compared with known iron-containing small-pore zeolites, the amount of iron species in a highly dispersed state is larger and the stability of the iron in such a state is higher. That is, peaks within a wavelength range of 190 to 300 nm in the UV-VIS spectrum are considered to be peaks corresponding to iron ions in a state referred to as "isolated iron ions". It is considered that, when the above-described iron content and the above-described area ratio are both satisfied, the iron-containing small-pore zeolite according to the present embodiment, compared with known iron-containing small-pore zeolites, does not merely have a high iron content, but has, among the contained iron, a higher proportion of iron in a state capable of contributing to reduction of nitrogen oxides at low temperatures. In the iron-containing small-pore zeolite according to the present embodiment, the proportion of the isolated iron ions in the iron-containing CHA-type zeolite is preferably high. The isolated iron ion content is preferably 0.8% by mass or more, 1.0% by mass or more, or 1.3% by mass or more. The isolated iron ion content is preferably higher. It is preferable that all iron be in the form of isolated ions. The isolated iron ion content may be 3.0% by mass or less, 2.0% by mass or less, or 1.5% by mass or less. The isolated iron ion content may be, for example, 0.8% by mass or more and 3.0% by mass or less, 1.0% by mass or more and 2.0% by mass or less, or 1.3% by mass or more and 2.0% by mass or less.

The isolated iron ion content in the present embodiment is a value determined from the following equation.$Isolated iron ion content \left[mass%\right] = iron content \left[mass%\right] \times area ratio \left[%\right]$ (2)

The iron-containing small-pore zeolite according to the present embodiment may contain isolated iron ions in different states, and particularly preferably contains four kinds of isolated iron ions in different states. When the isolated iron ions are contained in such states, the nitrogen oxide reduction performance at low temperatures after exposure to a high-temperature, high-humidity atmosphere tends to be higher compared with that before the exposure.

The state of the isolated iron ions can be determined by subjecting peaks within a wavelength range of 190 to 300 nm in a UV-VIS spectrum to peak separation by the above-described method. The state of the isolated iron ions can be determined by the number of peaks having peak tops within a wavelength range of 190 to 300 nm. For example, when the number of peaks having peak tops within a wavelength range of 190 to 300 nm is two, it can be regarded as containing two kinds of isolated iron ions in different states, and when the number of peaks having peak tops within a wavelength range of 190 to 300 nm is four, it can be regarded as containing four kinds of isolated iron ions in different states. The iron-containing small-pore zeolite according to the present embodiment preferably has three or more peaks having peak tops within a wavelength range of 190 to 300 nm in a UV-VIS spectrum, more preferably has four or more peaks having peak tops within a wavelength range of 190 to 300 nm in a UV-VIS spectrum, and further preferably has four peaks having peak tops within a wavelength range of 190 to 300 nm in a UV-VIS spectrum. Specifically, the iron-containing small-pore zeolite preferably has a peak having a peak top at a wavelength of 197.5 ± 7.5 nm, a peak having a peak top at a wavelength of 213.0 ± 8.0 nm, a peak having a peak top at a wavelength of 242.5 ± 7.5 nm, and a peak having a peak top at a wavelength of 265 ± 10.0 nm in a UV-VIS spectrum.

The iron-containing small-pore zeolite according to the present embodiment may contain an alkali metal (i.e., the alkali metal content may be more than 0% by mass). However, the lower the alkali metal content, the more the decrease in the nitrogen oxide properties at low temperatures due to exposure to a high-temperature, high-humidity atmosphere can be suppressed. Therefore, the alkali metal content is preferably 1.0% by mass or less, 0.5% by mass or less, or 0.1% by mass or less, and more preferably the iron-containing small-pore zeolite substantially does not contain an alkali metal (i.e., the content is at or below the detection limit (0% by mass)). The alkali metal content in the iron-containing small-pore zeolite according to the present embodiment may be, for example, 0% by mass or more and 0.2% by mass or less, 0% by mass or more and 0.1% by mass or less, more than 0% by mass and 0.2% by mass or less, or more than 0% by mass and 0.1% by mass or less.

When the iron-containing small-pore zeolite according to the present embodiment contains an alkali metal, examples of the alkali metal contained in the iron-containing small-pore zeolite include one or more selected from the group consisting of sodium, potassium, lithium and cesium; more specifically, one or more selected from the group consisting of sodium, potassium and cesium; further specifically, at least one of sodium and potassium; and still further specifically, sodium or potassium.

When the iron-containing small-pore zeolite according to the present embodiment contains an alkali metal, the alkali metal may be contained as a cation, and may be contained at the ion-exchange sites.

The iron-containing small-pore zeolite according to the present embodiment may contain a metal element other than iron without impairing the effect. Examples of the metal element contained in the iron-containing small-pore zeolite according to the present embodiment include one or more selected from the group consisting of copper (Cu), manganese (Mn) and yttrium (Y), and more specifically, copper.

In order to facilitate suppression of collapse of the zeolite structure after exposure to a high-temperature, high-humidity atmosphere, the molar ratio of silica to alumina in the iron-containing small-pore zeolite according to the present embodiment (molar ratio of silicon in terms of SiO₂ to aluminum in terms of Al₂O₃; hereinafter also referred to as a "SiO₂/Al₂O₃ ratio") is preferably 10.0 or more, 15.5 or more, or 16.5 or more. The SiO₂/Al₂O₃ ratio may be 50.0 or less, 30.0 or less, 24.5 or less, or 20.0 or less. In order to facilitate imparting heat resistance suitable for a nitrogen oxide reduction catalyst, the SiO₂/Al₂O₃ ratio may be, for example, 10.0 or more and 50.0 or less, 15.0 or more and 30.0 or less, 15.5 or more and 25.0 or less, or 16.5 or more and 20.0 or less. For example, when the small-pore zeolite is a zeolite containing a CHA structure (a CHA-type zeolite), preferred SiO₂/Al₂O₃ ratios include 15.5 or more and 24.5 or less, or 16.5 or more and 19.5 or less, and when the small-pore zeolite is a zeolite containing an AFX structure (an AFX-type zeolite), preferred SiO₂/Al₂O₃ ratios include 15.5 or more and 30.0 or less, or 20.0 or more and 24.5 or less.

In the present embodiment, the SiO₂/Al₂O₃ ratio may be determined, by inductively coupled plasma atomic emission spectroscopy (ICP-AES) using a general highfrequency inductively coupled plasma apparatus (e.g., OPTIMA 5300 DV manufactured by PerkinElmer, Inc.), as a molar ratio of silicon in terms of SiO₂ to aluminum in terms of Al₂O₃, on the basis of the contents of aluminum (Al) and silicon (Si) in the iron-containing small-pore zeolite according to the present embodiment.

In order to facilitate suppression of aggregation of iron during exposure to a high-temperature, high-humidity atmosphere, the BET specific surface area of the iron-containing small-pore zeolite according to the present embodiment is preferably 530 m²/g or more, 550 m²/g or more, 600 m²/g or more, or 620 m²/g or more. The BET specific surface area need not be unnecessarily high, and may be, for example, 850 m²/g or less, 800 m²/g or less, 750 m² or less, or 700 m²/g or less. Preferred BET specific surface areas include 530 m²/g or more and 850 m²/g or less, 550 m²/g or more and 850 m²/g or less, 600 m²/g or more and 800 m²/g or less, or 620 m²/g or more and 700 m²/g or less.

The BET specific surface area in the present embodiment is a value measured in accordance
with ISO 9277:2010(E), and may be determined by analyzing
a nitrogen adsorption isotherm within a relative pressure range of 0.05 to 0.15, the nitrogen adsorption isotherm being obtained under the following measurement conditions using a general BET specific surface area measuring apparatus (e.g., BELSOR
P-mini II manufactured by MicrotracBEL Corp.).

### <Nitrogen adsorption measurement conditions>

| | |
|---|---|
| Measurement sample | : 30 mg |
| Pretreatment | : vacuum atmosphere (≤ 10 Pa); 350°C; 2 hours |
| Measurement temperature | : -196°C |
| Measurement pressure | : equilibrium relative pressure 0.05 to 0.99 |

In order to facilitate suppression of a decrease in crystallinity after exposure to a high-temperature, high-humidity atmosphere, the ratio of the mesopore volume to the total volume of mesopores and micropores (hereinafter also referred to as a "mesopore volume ratio") in the iron-containing small-pore zeolite according to the present embodiment is preferably 0.40 or less, 0.25 or less, or 0.20 or less. The mesopore volume ratio may be 0 or more, or more than 0.10, and may be 0 or more and 0.40 or less, or more than 0.10 and 0.20 or less.

In order to increase the frequency of contact with nitrogen oxides in a nitrogen oxide reduction reaction, the total volume of mesopores and micropores (hereinafter also referred to as a "total pore volume") in the iron-containing small-pore zeolite according to the present embodiment is preferably 0.15 cm³/g or more, 0.20 cm³/g or more, or 0.25 cm³/g or more. An upper limit for the total pore volume may be 0.50 cm³/g or less, 0.40 cm³/g or less, 0.30 cm³/g or less, or 0.29 cm³/g or less. The total pore volume is preferably 0.15 cm³/g or more and 0.50 cm³/g or less, 0.20 cm³/g or more and 0.40 cm³/g or less, 0.20 cm³/g or more and 0.30 cm³/g or less, 0.25 cm³/g or more and 0.30 cm³/g or less, or 0.25 cm³/g or more and 0.29 cm³/g or less.

The total pore volume in the present embodiment is determined using the following equation on the basis of a nitrogen adsorption isotherm obtained by a method similar to that for measuring the BET specific surface area.$Total pore volume \left({cm}^{3}/g\right) = V \times 1.547 \times {10}^{- 3}$ (3)

In the above equation, V is an adsorption amount [cm³/g] when an equilibrium relative pressure (hereinafter also referred to as "p/p₀") in the nitrogen adsorption isotherm is 0.99.

Provided that the above mesopore volume ratio and the total pore volume are satisfied, the mesopore volume and the micropore volume are not particularly limited. The mesopore volume may be, for example, 0.15 cm³/g or less, or 0.10 cm³/g or less, and may be 0.01 cm³/g or more, or 0.03 cm³/g or more. The micropore volume may be 0.10 cm³/g or more, or 0.15 cm³/g or more, and may be 0.30 cm³/g or less, or 0.25 cm³/g or less. The micropore volume is preferably 0.10 cm³/g or more and 0.30 cm³/g or less, or 0.15 cm³/g or more and 0.25 cm³/g or less.

The micropore volume in the present embodiment is a value calculated by a t-plot method using a nitrogen adsorption isotherm. Measurement points at an average relative pressure (p/p₀) of 0.6 to 0.8 are approximated by a straight line, and the intercept thereof may be used as the micropore volume. In the t-plot method, a silica adsorption isotherm may be used as a standard isotherm.

The mesopore volume may be determined from the following equation using the total pore volume and the micropore volume obtained by the above-described method.$\begin{matrix}Mesopore volume \left({cm}^{3}/g\right) \\ = total pore volume \left({cm}^{3}/g\right) - micropore volume \left({cm}^{3}/g\right)\end{matrix}$ (4)

In order to suppress collapse of the zeolite structure due to exposure to a high-temperature, high-humidity atmosphere, the primary particle size of the iron-containing small-pore zeolite according to the present embodiment is preferably 0.3 µm or more, or 0.5 µm or more. On the other hand, from the viewpoint of handling (processability) in catalyst formation or the like, the primary particle size is preferably 10.0 µm or less, or 5.0 µm or less, and may be, for example, 0.3 µm or more and 10.0 µm or less, or 0.5 µm or more and 5.0 µm or less. The primary particle size in the present embodiment is the size of crystal particles (crystal particle size) of the iron-containing small-pore zeolite, and is the size (maximum diameter) of the smallest unit crystal particle observed as an independent particle in observation with a scanning electron microscope under the following conditions. In the present embodiment, the primary particles do not include aggregated particles (aggregates) formed by physical aggregation of crystal particles.

| | |
|---|---|
| Acceleration voltage | : 10 kV |
| Magnification | : 5000x. |

The iron-containing small-pore zeolite according to the present embodiment may contain aggregated particles formed by aggregation of crystal particles. The iron-containing small-pore zeolite according to the present embodiment may be composed mainly of primary particles of 0.3 µm or more and 10.0 µm or less, or may be essentially composed of aggregated particles formed by aggregation of primary particles of 0.3 µm or more and 10.0 µm or less. Further, the iron-containing small-pore zeolite may be essentially composed of primary particles of 0.3 µm or more, and may contain primary particles of less than 0.3 µm without impairing handling properties (processability).

The shape of the iron-containing small-pore zeolite according to the present embodiment may be any shape suitable for the intended purpose, and may be, for example, a powder or a molded body. A powder is suitable for coating on a substrate such as a honeycomb.

In the IR spectrum of the iron-containing small-pore zeolite according to the present embodiment, the ratio (hereinafter also referred to as "IRₚ₂/IRₚ₁ ratio") of the height intensity (hereinafter also referred to as "IRₚ₂") of a peak having a peak top at 3735 ± 10 cm⁻¹ to the height intensity (hereinafter also referred to as "IRₚ₁") of a peak having a peak top at 1860 ± 10 cm⁻¹ is 0.50 or less.

IR_{P1} and IR_{P2} are considered to be peak heights of IR peaks attributed to framework vibration of the iron-containing zeolite and silanol defects, respectively. The IRₚ₂/IRₚ₁ ratio can be used as an index of the amount of silanol defects in the iron-containing zeolite. A lower IRₚ₂/IRₚ₁ ratio is considered to correspond to a smaller amount of silanol defects. When the IRₚ₂/IRₚ₁ ratio of the iron-containing zeolite according to the present embodiment is more than 0.50, the amount of silanol defects is large, and the framework structure is likely to collapse when exposed to a high temperature, high-humidity environment. The IRₚ₂/IRₚ₁ ratio is preferably 0.50 or less, 0.49 or less, or 0.48 or less, and also preferably 0.00 or more, more than 0.00, 0.01 or more, or 0.02 or more. Specific combinations of the upper and lower limits for the IRₚ₂/IRₚ₁ ratio include 0.00 or more and 0.50 or less, more than 0.00 and 0.50 or less, 0.01 or more and 0.49 or less, or 0.02 or more and 0.48 or less.

IRₚ₁ and IRₚ₂ can be calculated from an IR spectrum obtained by Fourier transform infrared spectrophotometry (FT-IR) performed under the following conditions using a general FT-IR measuring apparatus (e.g., instrument name: Jasco FT/IR-6100 manufactured by JASCO Corporation).

| | |
|---|---|
| Measurement sample | : 0.01 g |
| Pretreatment | : under vacuum; 450°C (sample temperature); 1 hour |
| Measurement mode | : continuous scan |
| Measurement temperature | : under vacuum; 150°C (sample temperature) |
| Measurement range | : 350 to 4000 cm⁻¹ |
| Resolution | : 2.0 cm⁻¹ |
| Number of accumulations | : 128 |
| Zero filling | : ON |
| Detector | : TGS (triglycine sulfate) |

The obtained IR spectrum may be subjected to waveform processing using general analytical software (e.g., Spectra Mnager Version 2 Version 2.15.11 manufactured by JASCO Corporation). That is, with a base start set to 1750 cm⁻¹ and a base end set to 1950 cm⁻¹, and with a base start set to 2500 cm⁻¹ and a base end set to 3800 cm⁻¹, baseline correction is performed for these ranges. The height intensity of a peak having a peak top within a range of 1860 ± 10 cm⁻¹ is defined as IRₚ₁, and the height intensity of a peak having a peak top within a range of 3735 ± 10 cm⁻¹ is defined as IRₚ₂. On the basis of the obtained IRₚ₂ and IRₚ₁, the IRₚ₂/IRₚ₁ ratio may be determined using the following equation.${IR}_{p 2} / {IR}_{p 1} ratio = \left({IR}_{p 2}\right) / \left({IR}_{p 1}\right)$ (5)

The iron-containing small-pore zeolite according to the present embodiment preferably has high nitrogen oxide reduction performance after exposure treatment to a high-temperature, high-humidity atmosphere. The nitrogen oxide reduction rate measured under the following nitrogen oxide reduction conditions after exposure treatment to a high-temperature, high-humidity atmosphere under the following exposure conditions (hereinafter also referred to as a "hydrothermal durability treatment") is preferably 20% or more, 25% or more, or 30% or more, and may be 70% or less, or 50% or less.

### <Exposure Conditions>

| | |
|---|---|
| Atmosphere | : air having a moisture content of 20 vol% |
| Flow rate | : 300 mL/min |
| Treatment temperature | : 700°C |
| Treatment time | : 20 hours |

### <Nitrogen Oxide Reduction Conditions>

| | | |
|---|---|---|
| Composition of nitrogen oxide-containing gas | : NO | 200 ppm |
| | NH₃ | 200 ppm |
| | O₂ | 10 vol% |
| | H₂O | 3 vol% |
| | N₂ | balance |
| Flow rate of nitrogen oxide-containing gas | : 1.5 L/min | |
| Space velocity | : 60,000 hr⁻¹ | |
| Measurement temperature | : 200°C | |

The iron-containing small-pore zeolite according to the present embodiment can be used for known applications of small-pore zeolites, such as adsorbents, catalysts and supports thereof, and is preferably used as a catalyst containing the iron-containing small-pore zeolite, particularly as a nitrogen oxide reduction catalyst.

When used as a nitrogen oxide reduction catalyst, a nitrogen oxide reduction catalyst having a structure in which the iron-containing small-pore zeolite according to the present embodiment is applied to a substrate can be exemplified. The iron-containing small-pore zeolite according to the present embodiment can also be used in a nitrogen oxide reduction apparatus including the iron-containing small-pore zeolite, and further in a nitrogen oxide reduction system including the same.

The iron-containing small-pore zeolite according to the present embodiment may also be used as a zeolite composition containing the iron-containing small-pore zeolite and another zeolite. For example, the iron-containing small-pore zeolite according to the present embodiment may be used as two or more iron-containing small-pore zeolites according to the present embodiment in which one or more selected from the group consisting of framework structure, composition and iron content differ; may be used as a zeolite composition containing the iron-containing small-pore zeolite according to the present embodiment and another metal-containing zeolite; or may be used as a zeolite composition containing the iron-containing small-pore zeolite according to the present embodiment and a small-pore zeolite containing no metal.

### [Method for Producing Iron-Containing Small-Pore Zeolite]

A preferred method for producing the iron-containing small-pore zeolite according to the present embodiment is a method for producing an iron-containing small-pore zeolite, the method comprising crystallizing a composition containing a silica-alumina source, an iron source, an organic structure-directing agent, an alkali source and water, wherein a ratio of iron to silicon in terms of SiO₂ in the composition is more than 0.01, and the composition contains two or more kinds of alkali sources.

As methods for producing an iron-containing small-pore zeolite, a method of treating a small-pore zeolite with an iron compound (hereinafter also referred to as a "post-treatment method"), and a method of crystallizing a small-pore zeolite in the presence of an iron compound (hereinafter also referred to as a "crystallization method"), are known. In the post-treatment method, iron is incorporated in the small-pore zeolite by being supported, and an "iron-supported small-pore zeolite" is obtained. In the post-treatment method, while an iron-containing small-pore zeolite having a high iron content is obtained, a large amount of iron in a low-activity state is contained in the small-pore zeolite. Therefore, in the post-treatment method, even when iron in a high-activity state is contained, iron in a low-activity state is contained in a larger amount. As a result, an iron-containing small-pore zeolite having high activity, particularly, an iron-containing small-pore zeolite having high nitrogen oxide reduction performance at low temperatures of 200°C or less, cannot be obtained. Compared with the post-treatment method, the crystallization method can produce an iron-containing small-pore zeolite that contains iron in a relatively high-activity state. However, in the known crystallization method, crystallization of the small-pore zeolite substantially does not proceed when the iron content is high. For example, Patent Document 2 generally discloses a production method in which crystallization is performed at a molar ratio of iron to silica (Fe/SiO₂) of 0.001 to 0.2. However, in the production method specifically disclosed in Patent Document 2, Fe/SiO₂ is only a single value of 0.01, and no specific method for producing an iron-containing small-pore zeolite having Fe/SiO₂ of more than 0.01 is disclosed. Moreover, in Patent Document 2, not even a suggestion is given of conditions necessary for crystallizing an iron-containing small-pore zeolite having Fe/SiO₂ of more than 0.01. Furthermore, as described below, in the production method of Patent Document 2, an iron-containing small-pore zeolite cannot be obtained when a composition having Fe/SiO₂ of more than 0.01 is crystallized. In contrast, in the production method according to the present embodiment, it is considered that use of the above-described composition suppresses aggregation of the iron source during crystallization and enables crystallization to proceed while maintaining high dispersibility. This enables production of an iron-containing small-pore zeolite that contains a larger amount of iron in a high-activity state compared with iron-containing small-pore zeolites obtained by the post-treatment method and that has a higher iron content compared with iron-containing small-pore zeolites obtained by known crystallization methods.

The production method according to the present embodiment includes a step of crystallizing (hereinafter also referred to as a "crystallization step") a composition (hereinafter also referred to as a "raw material composition") containing a silica-alumina source, an iron source, an organic structure-directing agent source, an alkali source and water.

The silica-alumina source is a compound containing aluminum (Al) and silicon (Si), and is preferably an amorphous compound containing aluminum and silicon. Specific examples of the silica-alumina source include amorphous aluminosilicate. The silica-alumina source preferably contains at least amorphous aluminosilicate.

For crystallization of small-pore zeolites, a method of crystallizing a zeolite from an amorphous compound, and a method of decomposing a zeolite into building units and reconstructing them to crystallize a target zeolite (a "conversion method"), are known. In the conversion method, a zeolite is typically used as a starting material; for example, an FAU-type zeolite is used in the production of a CHA-type zeolite, and an FER-type zeolite is used in the production of an AEI-type zeolite. However, since zeolites are more expensive than amorphous compounds, the conversion method tends to result in higher production costs. Furthermore, compared with zeolites obtained by the conversion method, a small-pore zeolite obtained from an amorphous compound has a more robust framework, and as a result, is considered less likely to undergo collapse of the framework structure after exposure to a high-humidity atmosphere. Therefore, crystallization in the crystallization step is preferably a method of crystallizing an iron-containing small-pore zeolite from an amorphous compound. Further, the raw material composition preferably does not contain a zeolite as a silica-alumina source, more preferably does not contain an FAU-type zeolite, and further preferably does not contain an FAU-type zeolite or an FER-type zeolite.

The iron source is a compound containing iron, and may be any iron compound that can be uniformly dispersed in the raw material composition. From the viewpoint of improving the dispersibility in the raw material composition, the iron source is preferably a water-soluble iron compound. Specific examples of the iron compound include one or more selected from the group consisting of iron nitrate, iron sulfate, iron oxide, iron chloride, iron oxyhydroxide and iron hydroxide; further specifically, one or more selected from the group consisting of iron hydroxide, iron sulfate and iron nitrate; still further specifically, at least one of iron sulfate and iron nitrate; and still further specifically iron sulfate.

Examples of the organic structure-directing agent source include compounds of organic structure-directing agents (hereinafter also referred to as "SDAs") capable of directing small-pore zeolites; further specifically, quaternary ammonium salts capable of directing small-pore zeolites.

Examples of SDAs directing an iron-containing AEI-type zeolite include one or more selected from the group consisting of N,N-alkyl-2,6-alkylpiperidinium cations (N,N-dialkyl-2,6-dialkylpiperidinium cations) and N,N-alkyl-3,5-alkylpiperidinium cations (N,N-dialkyl-3,5-dialkylpiperidinium cations); further specifically, 1,1-dimethyl-3,5-dimethylpiperidinium cation.

The SDA directing an iron-containing CHA-type zeolite is preferably an N,N,N-trialkylcyclohexylammonium cation. Examples of N,N,N-trialkylcyclohexylammonium cations include one or more selected from the group consisting of an N,N,N-methyldiethylcyclohexylammonium cation, an N,N,N-dimethylethylcyclohexylammonium cation and an N,N,N-trimethylcyclohexylammonium cation.

Examples of SDAs directing an iron-containing AFX-type zeolite include 1,4-diazabicyclo[2.2.2]-octane-C4-diquat dibromide cation.

The SDA source may be composed of two or more SDAs directing a small-pore zeolite, or may be composed of two or more and five or less SDAs directing a small-pore zeolite, more specifically two or more and three or less SDAs, further specifically two SDAs. When the SDA source is two or more SDAs directing a small-pore zeolite, for example, the SDA source may be composed of a salt of an SDA directing a CHA-type zeolite and a salt of an SDA directing an AFX-type zeolite; more specifically, salts of two or more different SDAs directing a CHA-type zeolite; further specifically, two or more different salts of an SDA directing a CHA-type zeolite.

When producing an iron-containing CHA-type zeolite, the raw material composition contains, as an SDA, an N,N,N-trialkylcyclohexylammonium cation. Among these, one or more selected from the group consisting of an N,N,N-methyldiethylcyclohexylammonium (hereinafter also referred to as "CMDEA") cation, an N,N,N-dimethylethylcyclohexylammonium (hereinafter also referred to as "CDMEA") cation, and an N,N,N-trimethylcyclohexylammonium (hereinafter also referred to as "CTMA") cation is preferred; at least one of a CMDEA cation and a CDMEA cation is more preferred; and a CDMEA cation is further preferred. It is considered that, when the raw material composition contains these SDAs in addition to two kinds of alkali sources, crystallization can be promoted while suppressing aggregation of an iron source and generation of silanol defects in the zeolite structure. This is considered to result in an iron-containing CHA-type zeolite having a low IRₚ₂/IRₚ₁ ratio and a higher area ratio. When producing an iron-containing CHA-type zeolite, the raw material composition may contain, as the SDA, an N,N,N-trialkylcyclohexylammonium cation. The SDA preferably consists only of an N,N,N-trialkylcyclohexylammonium cation. On the other hand, the raw material composition may contain another SDA provided that a CHA-type zeolite is crystallized mainly by a structure-directing effect of an N,N,N-trialkylcyclohexylammonium cation.

The SDA source may be at least one of a salt containing an SDA and a compound containing an SDA, and may contain one or more selected from the group consisting of hydroxides, halides other than fluorides, carbonic acid monoester salts and sulfuric acid monoester salts, each containing an SDA; further specifically, one or more selected from the group consisting of hydroxides, chlorides, bromides and iodides, each containing an SDA; more specifically, one or more selected from the group consisting of hydroxides, bromides and iodides, each containing an SDA; and still further specifically, at least a bromide containing an SDA. The SDA source particularly preferably contains a hydroxide and a bromide. This facilitates an increase in the yield of the iron-containing small-pore zeolite. The raw material composition may contain, as the SDA source, two or more selected from the group consisting of hydroxides, chlorides, bromides and iodides, each containing the same SDA; further specifically, two or more selected from the group consisting of hydroxides, bromides and iodides, each containing the same SDA; still further specifically, at least a bromide; and still further specifically, a hydroxide and a bromide.

The alkali source is a compound containing an alkali metal element, and examples thereof include a compound containing one or more selected from the group consisting of sodium, potassium, rubidium and cesium; further specifically, a compound containing one or more selected from the group consisting of sodium, potassium and cesium; still further specifically, a compound containing at least one of sodium and potassium; still further specifically, a compound containing sodium or potassium; and still further specifically, a compound containing potassium.

Examples of the alkali source include one or more selected from the group consisting of hydroxides, fluorides, bromides, iodides, sulfates, nitrates and carbonates, each containing the above-described alkali metal element; one or more selected from the group consisting of hydroxides, bromides and iodides, each containing the above-described alkali metal element; or a hydroxide containing the above-described alkali metal element (hereinafter, e.g., an alkali source containing sodium is also referred to as a "sodium source", and an alkali source containing potassium is also referred to as a "potassium source").

The raw material composition contains two or more alkali sources, and contains two or more alkali metal elements. The raw material composition preferably contains two or more and four or less alkali sources, and more preferably contains two alkali sources. The iron-containing small-pore zeolite according to the present embodiment is not a naturally occurring zeolite, but is an artificially synthesized zeolite (synthetic zeolite). Crystallization of the synthetic small-pore zeolite proceeds while the zeolite structure is directed by an SDA.

The alkali sources contained in the raw material composition preferably contain at least a potassium source, and more preferably contain a sodium source and one or more selected from the group consisting of a potassium source, a lithium source and a cesium source. From the viewpoint of further suppressing a decrease in crystallinity of the obtained iron-containing small-pore zeolite after exposure to a high-temperature, high-humidity atmosphere, the alkali sources preferably contain a sodium source and a potassium source, and more preferably contain a sodium source and a potassium source. When the alkali sources contain potassium, a decrease in crystallinity after exposure to a high-temperature, high-humidity atmosphere is further suppressed. When the alkali sources contain sodium, crystallization is further promoted.

The molar ratio of potassium to sodium (hereinafter also referred to as "K/Na") in the raw material composition is preferably more than 1.0, 1.6 or more, or 2.0 or more, and is also preferably 5.0 or less, or 4.0 or less. The molar ratio may be, for example, more than 1.0 and 5.0 or less, or 1.6 or more and 4.0 or less.

As well as pure water and ion-exchange water, water contained in other starting materials, such as structural water, water of hydration and a solvent, may also be regarded as water in the raw material composition.

When starting materials such as the iron source contain an alkali metal element, these starting materials may also be regarded as alkali sources. Similarly, when, for example, the iron source contains aluminum, the iron source may also be regarded as an alumina source.

Preferred compositions of the raw material composition include the following molar compositions. In the following compositions, Alk represents an alkali metal, and when sodium and potassium are contained as alkali metals, Alk/SiO₂ may be regarded as (Na+K)/SiO₂.

| | |
|---|---|
| SiO₂/Al₂O₃ | = 10 or more, 15 or more, or 18 or more, 100 or less, 50 or less, or 30 or less, |
| SDA/SiO₂ | = 0.04 or more, 0.06 or more, or 0.08 or more, 1.0 or less, 0.6 or less, or 0.2 or less, 0.5 or less, 0.3 or less, or 0.1 or less, |
| Alk/SiO₂ | = 0.05 or more, 0.1 or more, or 0.15 or more, 1 or less, 0.5 or less, or 0.3 or less, |
| Fe/SiO₂ | = 0.005 or more, 0.01 or more, or 0.015 or more, 0.1 or less, 0.07 or less, or 0.05 or less, |
| H₂O/SiO₂ | = 5 or more, 10 or more, or 12 or more, 50 or less, 30 or less, or 18 or less, |
| OH/SiO₂ | = 0.1 or more, 0.15 or more, or 0.2 or more, 1.0 or less, 0.5 or less, or 0.3 or less |

Particularly preferred compositions of the raw material composition include the following molar compositions.

| | |
|---|---|
| SiO₂/Al₂O₃ | = 10 or more and 50 or less, preferably 15 or more and 25 or less |
| SDA/SiO₂ | = 0.04 or more and 1.0 or less preferably 0.04 or more and 0.15 or less |
| Alk/SiO₂ | = 0.05 or more and 1 or less preferably 0.1 or more and 0.35 or less |
| Fe/SiO₂ | = 0.005 or more and 0.1 or less |
| | preferably 0.01 or more and 0.05 or less |
| H₂O/SiO₂ | = 5 or more and 50 or less preferably 8 or more and 25 or less |
| OH/SiO₂ | = 0.1 or more and 1.0 or less preferably 0.1 or more and 0.5 or less |

where Alk represents sodium and potassium.

Examples of preferred compositions of the raw material composition in the production of the iron-containing CHA-type zeolite include the following molar compositions.

| | |
|---|---|
| SiO₂/Al₂O₃ | = 10 or more and 50 or less, preferably 15 or more and 25 or less more preferably 15 or more and 20 or less |
| SDA/SiO₂ | = 0.04 or more and 1.0 or less preferably 0.04 or more and 0.15 or less more preferably 0.05 or more and 0.10 or less |
| Alk/SiO₂ | = 0.05 or more and 1 or less preferably 0.1 or more and 0.40 or less more preferably 0.2 or more and 0.35 or less |
| K/Na | = more than 1.0 and 5.0 or less preferably 1.6 or more and 4.0 or less more preferably 2.0 or more and 3.8 or less |
| Fe/SiO₂ | = 0.005 or more and 0.1 or less preferably 0.01 or more and 0.05 or less more preferably 0.01 or more and 0.03 or less |
| H₂O/SiO₂ | = 5 or more and 50 or less preferably 8 or more and 25 or less more preferably 12 or more and 20 or less |
| OH/SiO₂ | = 0.1 or more and 1.0 or less preferably 0.1 or more and 0.5 or less more preferably 0.2 or more and 0.4 or less |

where Alk represents sodium and potassium, and SDA represents N,N,N-trialkylcyclohexylammonium cation.

Examples of preferred compositions of the raw material composition in the production of the iron-containing AFX-type zeolite include the following molar compositions.

| | |
|---|---|
| SiO₂/Al₂O₃ | = 10 or more and 50 or less, preferably 15 or more and 25 or less more preferably 20 or more and 25 or less |
| SDA/SiO₂ | = 0.04 or more and 1.0 or less preferably 0.04 or more and 0.15 or less more preferably 0.04 or more and 0.10 or less |
| Alk/SiO₂ | = 0.05 or more and 1 or less preferably 0.1 or more and 0.3 or less more preferably 0.15 or more and 0.20 or less |
| K/Na | = 0.1 or more and less than 1.0 preferably 0.1 or more and 0.5 or less |
| Fe/SiO₂ | = 0.005 or more and 0.1 or less preferably 0.01 or more and 0.05 or less more preferably 0.01 or more and 0.02 or less |
| H₂O/SiO₂ | = 5 or more and 50 or less preferably 8 or more and 25 or less more preferably 12 or more and 20 or less |
| OH/SiO₂ | = 0.1 or more and 1.0 or less preferably 0.1 or more and 0.5 or less more preferably 0.1 or more and 0.3 or less |

where Alk represents sodium and potassium, and SDA represents 1,3-di(1-adamantyl)imidazolium cation.

The raw material composition preferably does not contain fluorine (F) or phosphorus (P) because, in such a case, production equipment composed of general-purpose materials can be easily applied. The fluorine content may be 0 mass ppm or more and 100 mass ppm or less, and is further preferably at or below the detection limit (10 mass ppm or less). Similarly, the phosphorus content is preferably 0 mass ppm or more and 100 mass ppm or less, and is further preferably at or below the detection limit (0.01 mass ppm or less).

For promoting crystallization, the raw material composition may contain seed crystals. The seed crystals are zeolites for promoting crystallization of the small-pore zeolite, and are preferably one or more selected from the group consisting of AEI-type zeolite, CHA-type zeolite, OFF-type zeolite, ERI-type zeolite, HEU-type zeolite, MOR-type zeolite, KFI-type zeolite, AFX-type zeolite, AFT-type zeolite, EAB-type zeolite, GME-type zeolite and LEV-type zeolite; further specifically, one or more selected from the group consisting of CHA-type zeolite, AEI-type zeolite, MOR-type zeolite and AFX-type zeolite; still further specifically, at least one of CHA-type zeolite and AFX-type zeolite; and still further specifically, CHA-type zeolite.

The content of the seed crystals may be sufficiently smaller than the content of the silica-alumina source, and is preferably 5% by mass or less, or 3% by mass or less, and is also preferably 0% by mass or more, more than 0% by mass, or 0.1% by mass or more, as a mass ratio [mass%] of the total of silicon in terms of SiO₂ and aluminum in terms of Al₂O₃ in the seed crystals relative to the total of silicon in terms of SiO₂ and aluminum in terms of Al₂O₃ in the raw material composition (excluding the seed crystals). The mass ratio may be, for example, 0% by mass or more and 5% by mass or less, more than 0% by mass and 5% by mass or less, or more than 0% by mass and 3% by mass or less.

In the crystallization step, the raw material composition is crystallized. Thereby, crystallization proceeds while at least a part of the iron is incorporated into the zeolite structure, and an iron-containing small-pore zeolite can be obtained as a crystalline product. The crystallization may be carried out by hydrothermal treatment, and may be carried out under conditions under which the iron-containing small-pore zeolite is crystallized. Preferred crystallization conditions include the following conditions.

| | |
|---|---|
| Pressure : | autogenous pressure |
| Crystallization temperature : | 100°C or more, 130°C or more, or 165°C or more, and |
| | 200°C or less, or 185°C or less |

The crystallization time may be any duration during which the iron-containing small-pore zeolite can be sufficiently crystallized, and may be appropriately set in accordance with the amount of the raw material composition subjected to crystallization and the crystallization method. The crystallization time may be, for example, 4 hours or more, 24 hours or more, or 48 hours or more; and 150 hours or less, 100 hours or less, or 80 hours or less. In order to produce the iron-containing small-pore zeolite with practical productivity, the crystallization time is preferably 4 hours or more and 150 hours or less, 8 hours or more and 100 hours or less, or 24 hours or more and 48 hours or less.

In order to allow crystallization to proceed more uniformly, the crystallization is preferably carried out in a state in which the raw material composition is stirred. The stirring may be carried out by directly stirring the raw material composition, or by stirring a container containing the raw material composition.

The crystalline product (iron-containing small-pore zeolite) obtained by crystallization may be recovered by any method. Examples of the methods include recovering the crystalline product by solid-liquid separation, washing and drying.

The solid-liquid separation may be carried out by any method capable of separating the raw material composition after crystallization into a solid (crystalline product) and a liquid phase. Examples of the methods include one or more selected from the group consisting of filtration, decantation and centrifugation.

Washing may be carried out by any method capable of removing impurities contained in the recovered crystalline product. For example, washing with pure water may be used.

Drying may be carried out by any method capable of removing moisture physically adsorbed on the crystalline product. Examples of such methods include at least one of static drying and spray drying. Drying may be carried out in an air atmosphere at 100°C or more and 120°C or less.

In order to remove the SDA contained in the iron-containing small-pore zeolite (crystalline product after crystallization), the production method according to the present embodiment preferably includes a step of removing the organic structure-directing agent from the crystalline product (hereinafter also referred to as an "SDA removal step"). In the SDA removal step, the SDA removal method is not particularly limited; one or more selected from the group consisting of liquid-phase treatment using an acidic aqueous solution, exchange treatment using a resin, thermal decomposition treatment and calcination treatment may be exemplified. From the viewpoint of production efficiency, the SDA removal step is preferably at least one of thermal decomposition treatment and calcination treatment, more preferably calcination treatment. Preferred calcination conditions include the following conditions.

| | |
|---|---|
| Calcination atmosphere : | air |
| Calcination temperature : | 400°C or more, or 560°C or more, and 700°C or less, or 650°C or less |

The calcination time may be appropriately set in accordance with the crystalline product subjected to calcination and the calcination method, and may be, for example, 1 hour or more and 24 hours or less, 4 hours or more and 12 hours or less, or 6 hours or more and 8 hours or less.

In order to reduce the alkali metal content in the iron-containing small-pore zeolite, the production method according to the present embodiment may include a step of ion-exchanging the iron-containing small-pore zeolite (hereinafter also referred to as an "ion-exchange step"). The ion exchange may be carried out by any method capable of reducing the alkali metal content; for example, the iron-containing small-pore zeolite may be mixed with an aqueous ammonium chloride solution to carry out ion exchange.

If necessary, the iron-containing small-pore zeolite after ion exchange may be calcined.

The production method according to the present embodiment may include, in addition to the ion-exchange step or instead of the ion-exchange step, a step of mixing the iron-containing small-pore zeolite with a metal compound (hereinafter also referred to as a "metal-loading step"). This enables a metal element selected as desired depending on the purpose to be supported on the iron-containing small-pore zeolite.

The mixing method may be any method capable of loading the metal compound on the iron-containing small-pore zeolite; one or more selected from the group consisting of an ion-exchange method, an incipient wetness impregnation method, an evaporation to dryness method, a precipitation deposition method and a physical mixing method may be exemplified.

### EXAMPLES

The present disclosure will be described below by way of Examples. However, the present disclosure is not limited to these Examples. Evaluation methods and evaluation conditions are as follows.

### (Identification of Crystals)

XRD measurement of a sample was carried out using a powder X-ray diffractometer (instrument name: Ultima IV manufactured by Rigaku Corporation). The measurement conditions are as follows.

| | |
|---|---|
| Acceleration current/voltage | : 40 mA/40 kV |
| Radiation source | : CuKα radiation (λ = 1.5405 Å) |
| Measurement mode | : step scan |
| Scan condition | : 40 °/min |
| Measurement time | : 3 s |
| Measurement range | : 2θ = 3° to 43° |
| Divergence vertical limiting slit | : 10 mm |
| Divergence/incident slit | : 1° |
| Receiving slit | : open |
| Receiving Soller slit | : 5° |
| Detector | : semiconductor detector (D/teX Ultra) |
| Filter | : Ni filter |

The obtained XRD pattern was analyzed under the following conditions using analytical software (SmartLab Studio II manufactured by Rigaku Corporation) attached to the apparatus.

| | |
|---|---|
| Fitting conditions: | automatic; background refined split pseudo-Voigt function (peak shape) |
| Background removal method: | fitting method |
| Kα2 removal method: | Kα1/Kα2 ratio = 0.497 |

### (Composition Analysis)

A sample solution was prepared by dissolving a sample in a mixed aqueous solution of hydrofluoric acid and nitric acid. The sample solution was measured by inductively coupled plasma atomic emission spectroscopy (ICP-AES) using an ICP apparatus (instrument name: OPTIMA 5300 DV manufactured by PerkinElmer, Inc.).

### (Area Ratio)

The area ratio was determined by analyzing a UV-VIS spectrum measured under the following conditions using an ultraviolet-visible spectrophotometer (instrument name: V-770 manufactured by JASCO Corporation).

| | |
|---|---|
| Integrating sphere unit | : ISN-923 (manufactured by JASCO Corporation) |
| Measurement mode | : Diffuse reflectance method |
| Wavelength | : 190 to 700 nm |
| Temperature | : room temperature |
| Slit width | : 5 nm |
| Background | : barium sulfate |

The obtained UV-VIS spectrum was corrected such that the relative reflectance was 1 using analytical software (software name: Fityk ver. 0.9.8) attached to the ultraviolet-visible-near-infrared spectrophotometer. Subsequently, the corrected UV-VIS spectrum was subjected to KM transformation by the KM function (f(γ∞)) represented by the following equation.$f \left({γ}^{∞}\right) = {\left(1-{γ}^{∞}\right)}^{2} / 2 {γ}^{∞}$ (1)

After the KM-transformed UV-VIS spectrum was subjected to fitting and waveform separation using analytical software (e.g., Fityk 0.9.8) and Gaussian as a fitting function, the peak area within a wavelength range of 190 nm or more and 300 nm or less, the peak area within a wavelength range of more than 300 nm and 400 nm or less, and the peak area within a wavelength range of more than 400 nm and 600 nm or less were determined. The sum of these was taken as the peak area within a wavelength range of 190 nm or more and 600 nm or less. The area ratio was determined from the ratio of the peak area within a wavelength range of 190 nm or more and 300 nm or less to the peak area within a wavelength range of 190 nm or more and 600 nm or less.

### (BET Specific Surface Area)

The BET specific surface area was determined by analyzing a nitrogen adsorption isotherm within a relative pressure range of 0.05 to 0.15, the nitrogen adsorption isotherm being obtained under the following measurement conditions using a general BET specific surface area measuring apparatus (e.g., BELSORP-mini II manufactured by MicrotracBEL Corp.).

### <Nitrogen adsorption measurement conditions>

| | |
|---|---|
| Measurement sample | : 30 mg |
| Pretreatment | : vacuum atmosphere (≤ 10 Pa); 350°C; 2 hours |
| Measurement temperature | : -196°C |
| Measurement pressure | : equilibrium relative pressure 0.05 to 0.99 |

### (Total Pore Volume, Micropore Volume, and Mesopore Volume)

The total pore volume was determined using the following equation on the basis of a nitrogen adsorption isotherm obtained by a method similar to that for measuring the BET specific surface area.$Total pore volume \left({cm}^{3}/g\right) = V \times 1.547 \times {10}^{- 3}$ (3)

In the above equation, V is an adsorption amount [cm³/g] when an equilibrium relative pressure (hereinafter also referred to as "p/p₀") in the nitrogen adsorption isotherm is 0.99.

The micropore volume was calculated by a t-plot method using a nitrogen adsorption isotherm. That is, measurement points at an average relative pressure (p/p₀) of 0.6 to 0.8 were approximated by a straight line, and the intercept thereof was used as the micropore volume. In the t-plot method, a silica adsorption isotherm was used as a standard isotherm.

The mesopore volume was determined from the following equation using the total pore volume and the micropore volume obtained by the above-described method.$\begin{matrix}Mesopore volume \left({cm}^{3}/g\right) \\ = total pore volume \left({cm}^{3}/g\right) - micropore volume \left({cm}^{3}/g\right) \left(\begin{matrix}{IR}_{p 2} / {IR}_{p 1} \\ Ratio\end{matrix}\right)\end{matrix}$ (4)

IRₚ₁ and IRₚ₂ were calculated from an IR spectrum obtained by Fourier transform infrared spectrophotometry (FT-IR) performed under the following conditions using a general FT-IR measuring apparatus (instrument name: Jasco FT/IR-6100 manufactured by JASCO Corporation).

| | |
|---|---|
| Measurement sample | : 0.01 g |
| Pretreatment | : under vacuum; 450°C (sample temperature); 1 hour |
| Measurement mode | : continuous scan |
| Measurement temperature | : under vacuum; 150°C (sample temperature) |
| Measurement range | : 350 to 4000 cm⁻¹ |
| Resolution | : 2.0 cm⁻¹ |
| Number of accumulations | : 128 |
| Zero filling | : ON |
| Detector | : TGS (triglycine sulfate) |

The obtained IR spectrum was subjected to waveform processing using general analytical software (Spectra Mnager Version 2 Version 2.15.11 manufactured by JASCO Corporation). That is, with a base start set to 1750 cm⁻¹ and a base end set to 1950 cm⁻¹, and with a base start set to 2500 cm⁻¹ and a base end set to 3800 cm⁻¹, baseline correction was performed for these ranges. The height intensity of a peak having a peak top within a range of 1860 (± 10) cm⁻¹ was defined as IRₚ₁, and the height intensity of a peak having a peak top within a range of 3735 (± 10) cm⁻¹ was defined as IRₚ₂. On the basis of the obtained IRₚ₂ and IRₚ₁, the IRₚ₂/IRₚ₁ ratio was determined using the following equation.${IR}_{p 2} / {IR}_{p 1} ratio = \left({IR}_{p 2}\right) / \left({IR}_{p 1}\right)$ (5)

### Example 1

A raw material composition having the following molar composition was obtained by mixing, as starting materials, a 35 mass% aqueous solution of cyclohexyldimethylethylammonium hydroxide, a 50 mass% aqueous solution of cyclohexyldimethylethyl bromide, a 48 mass% aqueous solution of sodium hydroxide, a 48 mass% aqueous solution of potassium hydroxide, iron(III) nitrate nonahydrate, pure water, and an amorphous aluminosilicate precursor (SiO₂/Al₂O₃ = 17.9).

| | | |
|---|---|---|
| SiO₂/Al₂O₃ | | = 17.9 |
| CDMEAOH/SiO₂ | | = 0.02 |
| CDMEABr/SiO₂ | | = 0.06 |
| Alk/SiO₂ | | = 0.300 |
| | (Na/SiO₂ | = 0.075) |
| | (K/SiO₂ | = 0.225) |
| K/Na | | = 3.0 |
| Fe/SiO₂ | | = 0.025 |
| H₂O/SiO₂ | | = 18 |
| | OH/SiO₂ | = 0.32 |

CHA-type zeolite (SiO₂/Al₂O₃ = 23.8)% was mixed with 55 g of the raw material composition so that the seed crystal content was 2% by mass, and the resulting mixture was charged into a sealed container with a capacity of 80 mL. After charging, the container was subjected to hydrothermal treatment while rotating at 55 rpm at 170°C for 40 hours under autogenous pressure to obtain a crystalline product. The obtained crystalline product was recovered after solid-liquid separation, washing with pure water, and drying at 110°C in an air atmosphere. The crystalline product was a zeolite (CHA-type zeolite) composed of a single phase of CHA-type zeolite and having an SiO₂/Al₂O₃ ratio of 18.6.

The crystalline product was calcined at 600°C for 2 hours in an air atmosphere. The calcined crystalline product was mixed, at 60°C, with an aqueous ammonium chloride solution having an NH₄Cl concentration of 20% by mass such that the mass ratio of the crystalline product to ammonium chloride was crystalline product:ammonium chloride = 1:1, to perform NH₄ exchange of the iron-containing CHA-type zeolite. There was no change in the iron content due to the NH₄ exchange. After the NH₄ exchange, washing with pure water and drying at 110°C in an air atmosphere were performed to obtain the iron-containing CHA-type zeolite of this Example.

The iron-containing CHA-type zeolite of this Example was a zeolite composed of a single phase of CHA-type zeolite, and had an SiO₂/Al₂O₃ ratio of 18.6, an alkali metal content of less than 0.1% by mass, an iron content of 2.1% by mass, an area ratio of 79%, and an isolated iron ion content of 1.7% by mass. The iron-containing CHA-type zeolite of this Example had a BET specific surface area of 637 m²/g, a total pore volume of 0.29 cm³/g, a mesopore volume ratio of 0.17, a mesopore volume of 0.05 cm³/g, a micropore volume of 0.24 cm³/g, and an IRₚ₂/IRₚ₁ ratio of 0.37.

### Example 2

The iron-containing CHA-type zeolite of this Example was obtained in the same manner as in Example 1, except that a raw material composition having the following molar composition was used.

| | | |
|---|---|---|
| SiO₂/Al₂O₃ | | = 17.9 |
| CDMEAOH/SiO₂ | | = 0.02 |
| CDMEABr/SiO₂ | | = 0.06 |
| Alk/SiO₂ | | = 0.260 |
| | (Na/SiO₂ | = 0.065) |
| | (K/SiO₂ | = 0.195) |
| K/Na | | = 3.0 |
| Fe/SiO₂ | | = 0.016 |
| H₂O/SiO₂ | | = 18 |
| OH/SiO₂ | | = 0.28 |

The crystalline product was a zeolite (CHA-type zeolite) composed of a single phase of CHA-type zeolite and having an SiO₂/Al₂O₃ ratio of 18.9. The iron-containing CHA-type zeolite of this Example was a zeolite composed of a single phase of CHA-type zeolite, and had an SiO₂/Al₂O₃ ratio of 18.9, an Fe/Si ratio of 0.017, an alkali metal content of less than 0.1% by mass, an iron content of 1.4% by mass, an area ratio of 86%, and an isolated iron ion content of 1.2% by mass. The iron-containing CHA-type zeolite of this Example had a BET specific surface area of 661 m²/g, a total pore volume of 0.29 cm³/g, a mesopore volume ratio of 0.17, a mesopore volume of 0.05 cm³/g, a micropore volume of 0.24 cm³/g, and an IRₚ₂/IRₚ₁ ratio of 0.44.

Further, it was confirmed that, in the UV-VIS spectrum, the zeolite had a peak having a peak top at a wavelength of 192.5 nm, a peak having a peak top at a wavelength of 213.0 nm, a peak having a peak top at a wavelength of 243.0 nm, and a peak having a peak top at a wavelength of 267.5 nm, and contained four kinds of isolated iron ions in different states.

### Example 3

The iron-containing CHA-type zeolite of this Example was obtained in the same manner as in Example 1, except that a raw material composition having the following molar composition was used.

| | | |
|---|---|---|
| SiO₂/Al₂O₃ | | = 28.7 |
| CDMEAOH/SiO₂ | | = 0.02 |
| CDMEABr/SiO₂ | | = 0.06 |
| Alk/SiO₂ | | = 0.180 |
| | (Na/SiO₂ | = 0.045) |
| | (K/SiO₂ | = 0.135) |
| K/Na | | = 3.0 |
| Fe/SiO₂ | | = 0.020 |
| H₂O/SiO₂ | | = 18 |
| OH/SiO₂ | | = 0.20 |

The crystalline product was a zeolite (CHA-type zeolite) composed of a single phase of CHA-type zeolite and having an SiO₂/Al₂O₃ ratio of 30.8. The iron-containing CHA-type zeolite of this Example was a zeolite composed of a single phase of CHA-type zeolite, and had an SiO₂/Al₂O₃ ratio of 30.8, an alkali metal content of less than 0.1% by mass, an iron content of 1.5% by mass, an area ratio of 85%, and an isolated iron ion content of 1.3% by mass. The iron-containing CHA-type zeolite of this Example had a BET specific surface area of 654 m²/g, a total pore volume of 0.31 cm³/g, a mesopore volume ratio of 0.15, a mesopore volume of 0.04 cm³/g, a micropore volume of 0.25 cm³/g, and an IRₚ₂/IRₚ₁ ratio of 0.28.

Further, it was confirmed that, in the UV-VIS spectrum, the zeolite had a peak having a peak top at a wavelength of 211.5 nm, a peak having a peak top at a wavelength of 247.0 nm, a peak having a peak top at a wavelength of 267.5 nm, and a peak having a peak top at a wavelength of 278.5 nm, and contained four kinds of isolated iron ions in different states.

### Example 4

The iron-containing CHA-type zeolite of this Example was obtained in the same manner as in Example 1, except that a raw material composition having the following molar composition was used.

| | | |
|---|---|---|
| SiO₂/Al₂O₃ | | = 28.7 |
| CDMEAOH/SiO₂ | | = 0.02 |
| CDMEABr/SiO₂ | | = 0.06 |
| Alk/SiO₂ | | = 0.280 |
| | (Na/SiO₂ | = 0.070) |
| | (K/SiO₂ | = 0.210) |
| K/Na | | = 3.0 |
| Fe/SiO₂ | | = 0.040 |
| H₂O/SiO₂ | | = 18 |
| OH/SiO₂ | | = 0.30 |

The crystalline product was a zeolite (CHA-type zeolite) composed of a single phase of CHA-type zeolite and having an SiO₂/Al₂O₃ ratio of 30.7. The iron-containing CHA-type zeolite of this Example was a zeolite composed of a single phase of CHA-type zeolite, and had an SiO₂/Al₂O₃ ratio of 30.7, an alkali metal content of less than 0.1% by mass, an iron content of 2.9% by mass, an area ratio of 84%, and an isolated iron ion content of 2.4% by mass. The iron-containing CHA-type zeolite of this Example had a BET specific surface area of 663 m²/g, a total pore volume of 0.30 cm³/g, a mesopore volume ratio of 0.12, a mesopore volume of 0.03 cm³/g, a micropore volume of 0.26 cm³/g, and an IRₚ₂/IRₚ₁ ratio of 0.26.

Further, it was confirmed that, in the UV-VIS spectrum, the zeolite had a peak having a peak top at a wavelength of 212.5 nm, a peak having a peak top at a wavelength of 247.5 nm, a peak having a peak top at a wavelength of 266.5 nm, and a peak having a peak top at a wavelength of 282.5 nm, and contained four kinds of isolated iron ions in different states.

### Comparative Example 1

A crystalline product was obtained in the same manner as in Example 1, except that iron(III) nitrate nonahydrate was not used, and a raw material composition having the following molar composition was used.

| | | |
|---|---|---|
| | SiO₂/Al₂O₃ | = 19.0 |
| CDMEAOH/SiO₂ | | = 0.02 |
| CDMEABr/SiO₂ | | = 0.06 |
| Alk/SiO₂ | | = 0.16 |
| | (Na/SiO₂ | = 0.04) |
| | (K/SiO₂ | = 0.12) |
| K/Na | | = 3.0 |
| H₂O/SiO₂ | | = 18 |
| OH/SiO₂ | | = 0.18 |

The crystalline product was calcined at 600°C for 2 hours in an air atmosphere. After the calcination, NH₄ exchange was carried out in the same manner as in Example 1, followed by washing with pure water and drying at 110°C in an air atmosphere, to obtain a zeolite (CHA-type zeolite) composed of a single phase of CHA-type zeolite and having an SiO₂/Al₂O₃ ratio of 19.8 and an alkali metal content of less than 0.1% by mass.

7.0 g of the obtained zeolite, 1.0 g of iron(III) nitrate nonahydrate, and 2.4 g of pure water were mixed in a mortar. The resulting mixture was dried at 110°C for 5 hours in an air atmosphere, followed by calcination at 500°C for 2 hours in an air atmosphere, to obtain the iron-containing CHA-type zeolite of this Comparative Example.

The iron-containing CHA-type zeolite of this Comparative Example was a zeolite composed of a single phase of CHA-type zeolite, and had an SiO₂/Al₂O₃ ratio of 19.8, an alkali metal content of less than 0.1% by mass, an iron content of 2.0% by mass, an area ratio of 36%, and an isolated iron ion content of 0.7% by mass. The iron-containing CHA-type zeolite of this Comparative Example had a BET specific surface area of 742 m²/g, a total pore volume of 0.30 cm³/g, a mesopore volume ratio of 0.10, a mesopore volume of 0.03 cm³/g, and a micropore volume of 0.27 cm³/g.

Further, it was confirmed that, in the UV-VIS spectrum, the zeolite had a peak having a peak top at a wavelength of 192.5 nm, a peak having a peak top at a wavelength of 212.5 nm, and a peak having a peak top at a wavelength of 267.5 nm, and contained three kinds of isolated iron ions in different states.

### Comparative Example 2

The iron-containing CHA-type zeolite of this Comparative Example was obtained in the same manner as in Example 1, except that a raw material composition having the following molar composition was used.

| | | |
|---|---|---|
| SiO₂/Al₂O₃ | | = 17.9 |
| CDMEAOH/SiO₂ | | = 0.02 |
| CDMEABr/SiO₂ | | = 0.06 |
| Alk/SiO₂ | | = 0.15 |
| | (Na/SiO₂ | = 0.058) |
| | (K/SiO₂ | = 0.173) |
| K/Na | | = 2.98 |
| Fe/SiO₂ | | = 0.009 |
| H₂O/SiO₂ | | = 18 |
| OH/SiO₂ | | = 0.25 |

The crystalline product was a zeolite (CHA-type zeolite) composed of a single phase of CHA-type zeolite and having an SiO₂/Al₂O₃ ratio of 19.0. The iron-containing CHA-type zeolite of this Comparative Example was a zeolite composed of a single phase of CHA-type zeolite, and had an SiO₂/Al₂O₃ ratio of 19.0, an alkali metal content of less than 0.1% by mass, an iron content of 0.8% by mass, an area ratio of 90%, and an isolated iron ion content of 0.7% by mass.

Further, it was confirmed that, in the UV-VIS spectrum, the zeolite had a peak having a peak top at a wavelength of 192.5 nm, a peak having a peak top at a wavelength of 213.0 nm, a peak having a peak top at a wavelength of 245.0 nm, and a peak having a peak top at a wavelength of 267.5 nm, and contained four kinds of isolated iron ions in different states. On the other hand, it was confirmed that the area ratio was low and that not only isolated iron ions but also iron clusters and iron oxide particles were contained in large amounts.

### Comparative Example 3

A raw material composition was crystallized by a method according to Example 5 of Patent Document 2, except that the iron content was set to Fe/SiO₂ = 0.020. Specifically, a 25 mass% aqueous solution of trimethyl-1-adamantammonium hydroxide hydroxide, a 48 mass% aqueous sodium hydroxide solution, colloidal silica (LUDOX AS-40), aluminum hydroxide (manufactured by Sigma-Aldrich), and iron(III) nitrate nonahydrate were sequentially added to pure water, and the resulting mixture was stirred for 15 minutes to obtain a raw material composition having the following molar composition.

| | | |
|---|---|---|
| SiO₂/Al₂O₃ | | = 20.0 |
| ADAH/SiO₂ | | = 0.20 |
| Alk/SiO₂ | | = 0.20 |
| | (Na/SiO₂ | = 0.20) |
| | (K/SiO₂ | = 0.00) |
| K/Na | | = 0.0 |
| Fe/SiO₂ | | = 0.020 |
| H₂O/SiO₂ | | = 20 |

The raw material composition was charged into a sealed container with a capacity of 80 mL. After charging, the container was subjected to hydrothermal treatment under static conditions at 160°C for 10 days under autogenous pressure to obtain a crystalline product. The obtained crystalline product was recovered after solid-liquid separation, washing with pure water, and drying at 100°C in an air atmosphere. The crystalline product was an amorphous phase, and a CHA-type zeolite was not obtained. From this Comparative Example, it was confirmed that, in the method for producing an iron-containing CHA-type zeolite described in Patent Document 2, an iron-containing CHA zeolite having an iron content of 1.0% by mass or more cannot be easily synthesized.

### Comparative Example 4

The iron-containing CHA-type zeolite of this Comparative Example was obtained in the same manner as in Example 1, except that a 35 mass% aqueous solution of cyclohexyldimethylethylammonium hydroxide and a 50 mass% aqueous solution of cyclohexyldimethylethyl bromide were replaced with a 25 mass% aqueous solution of trimethyl-1-adamantammonium hydroxide hydroxide, and that a raw material composition having the following molar composition was used.

| | | |
|---|---|---|
| SiO₂/Al₂O₃ | | = 17.9 |
| ADAH/SiO₂ | | = 0.08 |
| Alk/SiO₂ | | = 0.24 |
| | (Na/SiO₂ | = 0.24) |
| | (K/SiO₂ | = 0.00) |
| K/Na | | = 0.0 |
| Fe/SiO₂ | | = 0.025 |
| H₂O/SiO₂ | | = 18 |
| OH/SiO₂ | | = 0.32 |

The crystalline product was a zeolite (CHA-type zeolite) composed of a single phase of CHA-type zeolite and having an SiO₂/Al₂O₃ ratio of 18.4. The iron-containing CHA-type zeolite of this Comparative Example was a zeolite composed of a single phase of CHA-type zeolite, and had an SiO₂/Al₂O₃ ratio of 18.4, an alkali metal content of less than 0.1% by mass, an iron content of 2.0% by mass, an area ratio of 84%, an isolated iron ion content of 1.7% by mass, and an IRₚ₂/IRₚ₁ ratio of 0.94.

Further, it was confirmed that, in the UV-VIS spectrum, the zeolite had a peak having a peak top at a wavelength of 192.5 nm, a peak having a peak top at a wavelength of 213.0 nm, a peak having a peak top at a wavelength of 245.0 nm, and a peak having a peak top at a wavelength of 267.5 nm, and contained four kinds of isolated iron ions in different states. On the other hand, it was confirmed that the area ratio was low and that not only isolated iron ions but also iron clusters and iron oxide particles were contained in large amounts.

Table 1 shows the results, where "-" indicates not measured.

**[Table 1]**

| | Zeolite structure | SiO₂/Al₂O₃ ratio (-) | Iron content (mass%) | Area ratio (%) | Isolated iron ion content (mass%) | IRₚ₂/IRₚ₁ ratio (-) |
|---|---|---|---|---|---|---|
| Example 1 | CHA | 18.5 | 2.1 | 79 | 1.7 | 0.37 |
| Example 2 | CHA | 18.9 | 1.4 | 89 | 1.2 | 0.44 |
| Example 3 | CHA | 30.8 | 1.5 | 85 | 1.3 | 0.28 |
| Example 4 | CHA | 30.7 | 2.9 | 84 | 2.4 | 0.26 |
| Comparative example 1 | CHA | 19.8 | 2.0 | 36 | 0.7 | - |
| Comparative example 2 | CHA | 19.0 | 0.8 | 90 | 0.7 | - |
| Comparative example 4 | CHA | 18.4 | 2.0 | 84 | 1.7 | 0.94 |

Although the iron-containing CHA-type zeolite of Example 1 had an iron content comparable to that of the iron-containing CHA-type zeolite of Comparative Example 1, the iron-containing CHA-type zeolite of Example 1 exhibited a higher area ratio. Further, a comparison between Comparative Example 1 and Example 2, which had comparable area ratios, showed that the iron content in Example 2 was higher. This confirms that, when the small-pore zeolites contain comparable amounts of iron, the iron-containing small-pore zeolites in the Examples contain iron with high dispersibility. It was also confirmed that the iron-containing CHA-type zeolites of Examples 1 to 4 had lower IRₚ₂/IRₚ₁ ratios and smaller amounts of silanol defects than in Comparative Example 4.

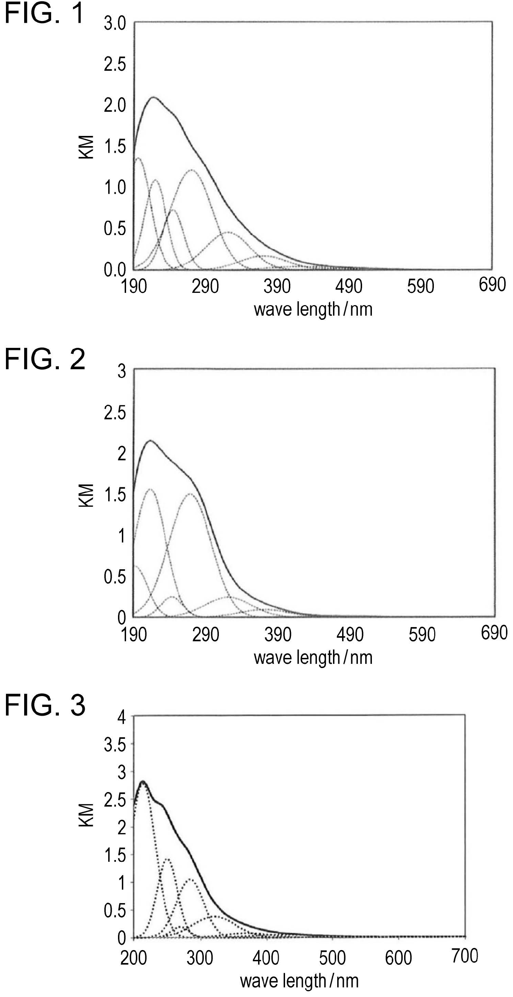

Figs. 1 to 4 show the UV-VIS spectra of Examples 1 and 2, and Comparative Examples 1 and 2, respectively. In Figs. 1 to 4, the solid line indicates the measured value, and the broken lines indicate the separated spectra.

### Measurement Example 1 (Evaluation of Nitrogen Oxide Reduction Performance)

The nitrogen oxide reduction performance after hydrothermal durability treatment of the zeolites obtained in the Examples and Comparative Examples was evaluated. Specifically, the iron-containing small-pore zeolites of the Examples and Comparative Examples were each molded and pulverized to obtain aggregated particles having an aggregate size of 12 to 20 mesh. After 3 mL of the aggregated particles were packed into an atmospheric-pressure fixed-bed flow reactor, hydrothermal durability treatment was carried out by flowing air containing 20% by volume of moisture under the following conditions.

| | |
|---|---|
| Air flow rate | : 300 mL/min |
| Treatment temperature | : 700°C |
| Treatment time | : 20 hours |

1.5 mL of an aggregated particle sample was packed into an atmospheric-pressure fixed-bed flow reactor, maintained at the following measurement temperature, and a nitrogen oxide-containing gas was flowed. The nitrogen oxide concentrations were measured at the inlet and outlet of the atmospheric-pressure fixed-bed flow reactor. The flow conditions of the nitrogen oxide-containing gas are as follows.

| | | |
|---|---|---|
| Composition of nitrogen oxide-containing gas | : NO | 200 ppm |
| | NH₃ | 200 ppm |
| | O₂ | 10 vol% |
| | H₂O | 3 vol% |
| | N2 | balance |
| Flow rate of nitrogen oxide-containing gas | : 1.5 L/min | |
| Space velocity | : 60,000 hr⁻¹ | |
| Measurement temperature | : 150°C to 500°C | |

The nitrogen oxide reduction rate was determined from the nitrogen oxide concentrations by the following equation.$\begin{matrix}Nitrogen oxide reduction rate \left(%\right) \\ = \left\{\left(\left[NOx\right]in-\left[NOx\right]out\right)/\left[NOx\right]in\right\} \times 100\end{matrix}$ where [NOx]in is the nitrogen oxide concentration of the nitrogen oxide-containing gas at the inlet of the atmospheric-pressure fixed-bed flow reactor, and [NOx]out is the nitrogen oxide concentration of the nitrogen oxide-containing gas at the outlet of the atmospheric-pressure fixed-bed flow reactor.

Table 2 shows the results.

**[Table 2]**

| | Nitrogen oxide reduction rate [%] | | | | |
|---|---|---|---|---|---|
| | 150°C | 200°C | 300°C | 400°C | 500°C |
| Example 1 | 11 | 41 | 84 | 89 | 87 |
| Example 2 | 10 | 40 | 84 | 89 | 88 |
| Example 3 | 12 | 39 | 84 | 88 | 85 |
| Example 4 | 12 | 41 | 84 | 89 | 86 |
| Comparative example 1 | 6 | 25 | 66 | 73 | 70 |
| Comparative example 2 | 8 | 31 | 79 | 84 | 84 |
| Comparative example 4 | 3 | 23 | 65 | 68 | 66 |

From Table 2, it was confirmed that, compared with the iron-containing CHA-type zeolites of the Comparative Examples, the iron-containing CHA-type zeolites of the Examples exhibited not only higher nitrogen oxide reduction performance at low temperatures of 200°C or less, but also higher nitrogen oxide reduction performance in a high-temperature region of 300°C or more. Further, in the iron-containing CHA-type zeolite of Comparative Example 1 obtained by the post-loading method, the nitrogen oxide reduction rate at 200°C decreased to less than 40% of the nitrogen oxide reduction rate at 300°C, whereas those of the iron-containing CHA-type zeolites of Examples 1 and 2 were both 45% or more. This confirmed that the iron-containing CHA-type zeolites of the Examples are less likely to exhibit a decrease in nitrogen oxide reduction rate due to a decrease in temperature for nitrogen oxide reduction. In Comparative Examples 1 and 2, the isolated iron ion contents were substantially the same. However, the iron-containing CHA-type zeolite of Comparative Example 1 containing a large amount of iron clusters and iron oxide particles exhibited a lower nitrogen oxide reduction rate in all temperature ranges from low temperature to high temperature, compared with the iron-containing CHA-type zeolite of Comparative Example 2. Further, in the iron-containing CHA-type zeolites of Example 1 and Comparative Example 4, the iron contents and the isolated iron ion contents were each substantially the same. However, the iron-containing CHA-type zeolite of Comparative Example 1 having a high IRₚ₂/IRₚ₁ ratio exhibited a lower nitrogen oxide reduction rate in all temperature ranges from low temperature to high temperature, compared with the iron-containing CHA-type zeolite of Example 1.

### Example 5

A raw material composition having the following molar composition was obtained by mixing 1,3-di(1-adamantyl)imidazolium bromide (DAdIBr), a 48 mass% aqueous solution of sodium hydroxide, a 48 mass% aqueous solution of potassium hydroxide, iron(III) nitrate nonahydrate, pure water, and an amorphous aluminosilicate precursor (SiO₂/Al₂O₃ = 22.0).

| | | |
|---|---|---|
| SiO₂/Al₂O₃ | | = 22.0 |
| DAdIBr/SiO₂ | | = 0.05 |
| Alk/SiO₂ | | = 0.16 |
| | (Na/SiO₂ | = 0.14) |
| | (K/SiO₂ | = 0.02) |
| K/Na | | = 0.14 |
| Fe/SiO₂ | | = 0.013 |
| H₂O/SiO₂ | | = 18 |
| OH/SiO₂ | | = 0.16 |

The iron-containing AFX-type zeolite of this Example was obtained in the same manner as in Example 1, except that CHA-type zeolite (SiO₂/Al₂O₃ = 24.9) was mixed with the raw material composition so that the seed crystal content was 1% by mass.

The crystalline product was a zeolite (AFX-type zeolite) composed of a single phase of AFX-type zeolite and having an SiO₂/Al₂O₃ ratio of 23.3. The iron-containing AFX-type zeolite of this Example was a zeolite composed of a single phase of AFX-type zeolite, and had an SiO₂/Al₂O₃ ratio of 23.3, an Fe/Si ratio of 0.014, an alkali metal content of less than 0.1% by mass, an iron content of 1.2% by mass, an area ratio of 83%, an isolated iron ion content of 1.0% by mass, and an IRₚ₂/IRₚ₁ ratio of 0.04.

Further, it was confirmed that, in the UV-VIS spectrum, the zeolite had a peak having a peak top at a wavelength of 196.5 nm, a peak having a peak top at a wavelength of 219.5 nm, a peak having a peak top at a wavelength of 245.0 nm, and a peak having a peak top at a wavelength of 267.5 nm, and contained four kinds of isolated iron ions in different states.

### Comparative Example 5

A crystalline product was obtained in the same manner as in Example 5, except that iron(III) nitrate nonahydrate was not used, and that the starting materials were mixed so that the raw material composition had the following molar composition.

| | | |
|---|---|---|
| SiO₂/Al₂O₃ | | = 22.0 |
| DAdIBr/SiO₂ | | = 0.05 |
| Alk/SiO₂ | | = 0.15 |
| | (Na/SiO₂ | = 0.13) |
| | (K/SiO₂ | = 0.02) |
| K/Na | | = 0.15 |
| H₂O/SiO₂ | | = 18 |
| OH/SiO₂ | | = 0.15 |

The crystalline product was calcined at 600°C for 2 hours in an air atmosphere. After the calcination, NH₄ exchange was carried out in the same manner as in Example 1, followed by washing with pure water and drying at 110°C in an air atmosphere, to obtain a zeolite (AFX-type zeolite) composed of a single phase of AFX-type zeolite and having an SiO₂/Al₂O₃ ratio of 23.3 and an alkali metal content of less than 0.1% by mass.

7.0 g of the obtained zeolite, 1.0 g of iron(III) nitrate nonahydrate, and 2.4 g of pure water were mixed in a mortar. The resulting mixture was dried at 110°C for 5 hours in an air atmosphere, followed by calcination at 500°C for 2 hours in an air atmosphere, to obtain the iron-containing AFX-type zeolite of this Comparative Example.

The iron-containing AFX-type zeolite of this Comparative Example was a zeolite composed of a single phase of AFX-type zeolite, and had an SiO₂/Al₂O₃ ratio of 23.3, an Fe/Si ratio of 0.009, an alkali metal content of less than 0.1% by mass, an iron content of 1.4% by mass, an area ratio of 37%, and an isolated iron ion content of 0.5% by mass.

Further, it was confirmed that, in the UV-VIS spectrum, the zeolite had a peak having a peak top at a wavelength of 194.0 nm, a peak having a peak top at a wavelength of 224.0 nm, and a peak having a peak top at a wavelength of 267.5 nm, and contained three kinds of isolated iron ions in different states.

### Comparative Example 6

A raw material composition was crystallized by a method according to Example 5 of Patent Document 2, except that the iron content was set to Fe/SiO₂ = 0.02. Specifically, 28.4 g of a 25 mass% aqueous solution of trimethyl-1-adamantammonium hydroxide (Tokyo Chemical Industry Co., Ltd.) was mixed with 2.0 g of a 48 mass% aqueous sodium hydroxide solution. 18.0 g of a silica colloid suspension in water (40 mass%, LUDOX-AS, Sigma-Aldrich) and 0.6 g of aluminum oxide (Sigma Aldrich) were added, and the resulting mixture was maintained under stirring for 15 minutes. Finally, 0.969 g of iron(III) nitrate nonahydrate (Fe(NO₃)₃·9H₂O, Sigma Aldrich, 98%) was added, water was added until the synthesis mixture reached a desired gel concentration, and the mixture was maintained under stirring for 15 minutes. The final gel composition was SiO₂:0.05Al₂O₃:0.02Fe:0.2TMAdaOH:0.2NaOH:20H₂O. The obtained gel was charged into a stainless steel autoclave with a Teflon (registered trademark) liner. Then, crystallization was carried out at 160°C for 10 days under static conditions. The solid product was filtered, washed with a large amount of water, and dried at 100°C.

The obtained solid product was amorphous, and in the XRD pattern thereof, no XRD peaks attributed to a CHA structure were confirmed.

From this Comparative Example, it was confirmed that, when the amount of iron is increased under the manufacturing conditions of Patent Document 2, an iron-containing CHA-type zeolite cannot be crystallized.

Table 3 shows the results.

**[Table 3]**

| | Zeolite structure | SiO₂/Al₂O₃ ratio (-) | Iron content (mass%) | Area ratio (%) | Isolated iron ion content (mass%) | IRₚ₂/IRₚ₁ ratio (-) |
|---|---|---|---|---|---|---|
| Example 5 | AFX | 23.3 | 1.2 | 83 | 1.0 | 0.04 |
| Comparative example 5 | AFX | 23.3 | 1.4 | 37 | 0.5 | - |

Example 5 exhibited an area ratio that is 2 times or more as high as the area ratio of Comparative Example 5, despite having a lower isolated iron ion content; it was confirmed that the iron-containing AFX-type zeolite of this Example also contained iron in a more highly dispersed state, similarly to the iron-containing CHA-type zeolite. It was also confirmed that the iron-containing AFX-type zeolite of Example 5 had a low IRₚ₂/IRₚ₁ ratio.

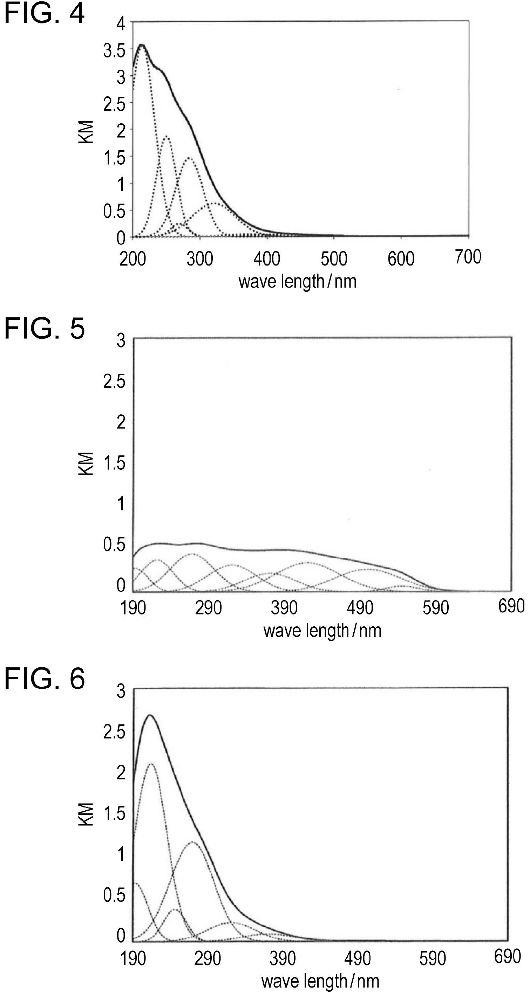

Figs. 5 and 6 show the UV-VIS spectra of Example 5 and Comparative Example 5, respectively. In Figs. 5 and 6, the solid line indicates the measured value, and the broken lines indicate the separated spectra.

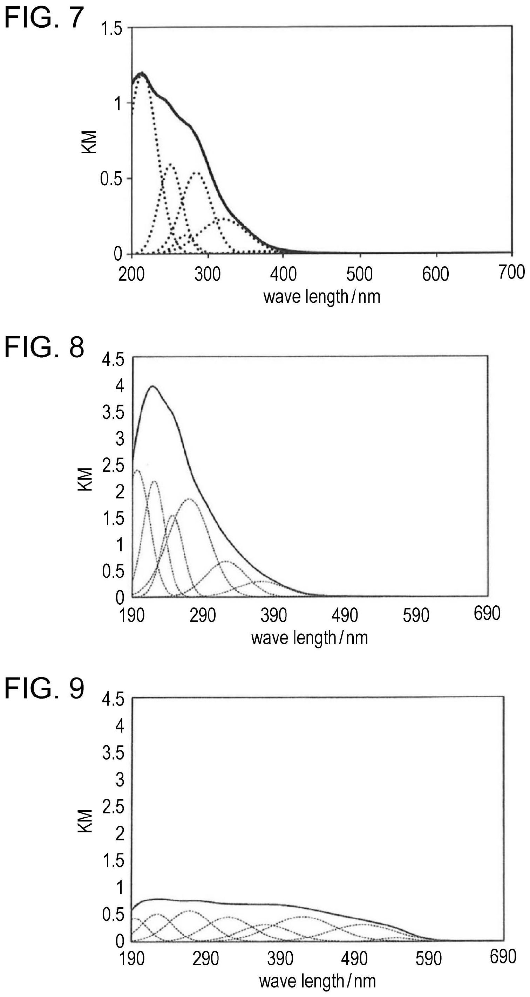

Further, from Fig. 7, it was confirmed that the iron-containing AFX-type zeolite of Example 5 is essentially composed of aggregated particles formed by aggregation of crystal particles having a primary particle size of 0.3 µm or more and 5.0 µm or less.

### Measurement Example 2 (Evaluation of Nitrogen Oxide Reduction Performance)

The nitrogen oxide reduction performance after hydrothermal durability treatment of Example 5 and Comparative Example 5 was evaluated in the same manner as in Measurement Example 1. Table 4 shows the results.

**[Table 4]**

| | Nitrogen oxide reduction rate [%] | | | | |
|---|---|---|---|---|---|
| | 150°C | 200°C | 300°C | 400°C | 500°C |
| Example 5 | 11 | 30 | 75 | 85 | 87 |
| Comparative example 5 | 5 | 15 | 52 | 62 | 62 |

Similarly to the iron-containing CHA-type zeolite, in the iron-containing AFX-type zeolite, compared with the iron-containing AFX-type zeolite (iron-supported AFX-type zeolite) obtained by the post-loading method, the iron-containing AFX-type zeolite of Example 5 exhibited higher nitrogen oxide reduction performance at low temperatures, and particularly, the nitrogen oxide reduction rate at each of 150°C and 200°C was 2 times or more as high as the nitrogen oxide reduction rate of Comparative Example 5. Further, the nitrogen oxide reduction rate at 200°C was reduced to 40% of the nitrogen oxide reduction rate at 300°C in Example 5, whereas in Comparative Example 5, it was less than 30% in each case; it was also confirmed that the iron-containing FAX-type zeolite of the Example is less likely to exhibit a decrease in nitrogen oxide reduction rate due to a decrease in reaction temperature for nitrogen oxide reduction.

### Measurement Example 3 (Change in Nitrogen Oxide Reduction Performance Before and After Hydrothermal Durability Treatment)

The nitrogen oxide reduction performance of the Examples was evaluated in the same manner as in Measurement Example 1, except that hydrothermal durability treatment was not performed and that the measurement temperature was set to 150°C or 200°C.

Table 5 shows the results together with the nitrogen oxide reduction rates after hydrothermal durability treatment.

**[Table 5]**

| | Nitrogen oxide reduction rate [%] | | | |
|---|---|---|---|---|
| | Before hydrothermal durability treatment | | After hydrothermal durability treatment | |
| | 150°C | 200°C | 150°C | 200°C |
| Example 1 | 5 | 17 | 11 | 41 |
| Example 2 | 5 | 14 | 10 | 40 |
| Example 3 | 4 | 13 | 12 | 39 |
| Example 4 | 7 | 15 | 12 | 41 |
| Example 5 | 6 | 10 | 11 | 30 |

It was confirmed that, in all Examples, the nitrogen oxide reduction rates at 150°C and 200°C were both improved by hydrothermal durability treatment. From this, it can be expected that the iron-containing small-pore zeolite of the Examples has excellent nitrogen oxide reduction performance and, in addition, can be used as a catalyst having a long service life when used as a nitrogen oxide reduction catalyst.

The entire contents of the specification, claims and abstract of Japanese Patent Application No. 2024-004515 filed on January 16, 2024 are hereby incorporated herein by reference as disclosed in the description of the present disclosure.

## Claims

1. An iron-containing small-pore zeolite having an iron content of 1.0% by mass or more, wherein a ratio of a height intensity of a peak having a peak top at 3735 ± 10 cm⁻¹ to a height intensity of a peak having a peak top at 1860 ± 10 cm⁻¹ in an IR spectrum is 0.50 or less; and, in a UV-VIS spectrum thereof, a proportion of a peak area within a wavelength range of 190 to 300 nm to a peak area within a wavelength range of 190 to 600 nm is 60% or more.

2. The iron-containing small-pore zeolite according to claim 1, having a BET specific surface area of 530 m²/g or more.

3. The iron-containing small-pore zeolite according to claim 1 or 2, having an isolated iron ion content of 0.8% by mass or more.

4. The iron-containing small-pore zeolite according to any one of claims 1 to 3, wherein a ratio of a mesopore volume to a total volume of mesopores and micropores is 0.40 or less.

5. The iron-containing small-pore zeolite according to any one of claims 1 to 4, wherein the total volume of mesopores and micropores is 0.15 cm³/g or more.

6. The iron-containing small-pore zeolite according to any one of claims 1 to 5, wherein a molar ratio of silica to alumina is 10 or more.

7. The iron-containing small-pore zeolite according to any one of claims 1 to 6, wherein the small-pore zeolite is a zeolite having one or more structures selected from the group consisting of AEI, CHA, LEV, MWW, ERI and AFX.

8. The iron-containing small-pore zeolite according to any one of claims 1 to 7, wherein the small-pore zeolite is a CHA-type zeolite or an AFX-type zeolite.

9. The iron-containing small-pore zeolite according to any one of claims 1 to 8, wherein a nitrogen oxide reduction rate is 20% or more, the nitrogen oxide reduction rate being measured under the following nitrogen oxide reduction conditions after exposure treatment to a high-temperature, high-humidity atmosphere under the following exposure conditions.
<Exposure Conditions>
| | |
|---|---|
| Atmosphere : | air having a moisture content of 20 vol% |
| Flow rate : | 300 mL/min |
| Treatment temperature : | 700°C |
| Treatment time : | 20 hours |
<Nitrogen Oxide Reduction Conditions>
| | |
|---|---|
| Composition of nitrogen oxide-containing gas : NO | 200 ppm |
| NH₃ | 200 ppm |
| O₂ | 10 vol% |
| H₂O | 3 vol% |
| N₂ | balance |
| Flow rate of nitrogen oxide-containing gas : | 1.5 L/min |
| Space velocity : | 60,000 hr⁻¹ |
| Measurement temperature : | 200°C |

10. A method for producing the iron-containing small-pore zeolite according to any one of claims 1 to 9, the method comprising crystallizing a composition containing a silica-alumina source, an iron source, an organic structure-directing agent, an alkali source and water, wherein a ratio of iron to silicon in terms of SiO₂ in the composition is more than 0.01, and the composition contains two or more kinds of alkali sources.

11. The method according to claim 10, wherein the composition does not contain a zeolite as the silica-alumina source.

12. The method according to claim 10 or 11, wherein the alkali source contains at least a potassium source.

13. A catalyst comprising the iron-containing small-pore zeolite according to any one of claims 1 to 9.
